(19) Europäisches Patentamt / European Patent Office / Office européen des brevets

(11) **EP 2 856 256 B1**

(12) **FASCICULE DE BREVET EUROPEEN**

(45) Date de publication et mention de la délivrance du brevet:
**06.09.2023  Bulletin 2023/36**

(21) Numéro de dépôt: **13728467.5**

(22) Date de dépôt: **23.05.2013**

(51) Classification Internationale des Brevets (IPC):
***G03B 21/60*** *(2014.01)*

(52) Classification Coopérative des Brevets (CPC):
**G03B 21/60**

(86) Numéro de dépôt international:
**PCT/FR2013/051122**

(87) Numéro de publication internationale:
**WO 2013/175129 (28.11.2013 Gazette 2013/48)**

(54) **PROCEDE DE PROJECTION OU DE RETROPROJECTION SUR UN VITRAGE COMPRENANT UN ELEMENT EN COUCHES TRANSPARENT PRESENTANT DES PROPRIETES DE REFLEXION DIFFUSE**

PROJEKTION ODER RE-PROJEKTION VERFAHREN AUF EIN GLAS DER EIN TRANSPARENT GESCHICHTETEN ELEMENT MIT WEITLÄUFIGEN REFLEXIONSEINGESCHAFTEN ENTHÄLT

PROCESS OF PROJECTION OR RE-PROJECTION ON A GLASS COMPRISING A TRANSPARENT LAYERED ELEMENT PRESENTING DIFFUSE REFLECTION PROPERTIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.05.2012  FR 1254850**

(43) Date de publication de la demande:
**08.04.2015  Bulletin 2015/15**

(73) Titulaire: **SAINT-GOBAIN GLASS FRANCE**
**92400 Courbevoie (FR)**

(72) Inventeurs:
• **EHRENSPERGER, Marie-Virginie**
**75019 Paris (FR)**
• **GAYOUT, Patrick**
**93250 Villemomble (FR)**

• **MIMOUN, Emmanuel**
**F-75016 Paris (FR)**
• **SANDRE-CHARDONNAL, Etienne**
**44200 Nantes (FR)**

(74) Mandataire: **Saint-Gobain Recherche Département Propriété Industrielle**
**39 Quai Lucien Lefranc**
**93300 Aubervilliers (FR)**

(56) Documents cités:
| | |
|---|---|
| EP-A1- 2 128 520 | EP-A1- 2 670 594 |
| EP-A2- 1 478 034 | EP-A2- 1 848 050 |
| US-A- 3 661 686 | US-A- 4 264 664 |
| US-A1- 2003 161 997 | |

**Description**

L'invention concerne un procédé de projection ou de rétroprojection dans lequel on utilise un vitrage comme écran de projection ou de rétroprojection comprenant un élément en couches transparent à propriétés de réflexion diffuse. L'invention concerne également un vitrage convenant tout particulièrement pour le procédé de projection ou de rétroprojection de l'invention.

Les vitrages connus comprennent les vitrages transparents standards qui donnent lieu à une transmission et une réflexion spéculaires d'un rayonnement incident sur le vitrage et les vitrages translucides qui donnent lieu à une transmission et une réflexion diffuse d'un rayonnement incident sur le vitrage.

De manière usuelle, la réflexion par un vitrage est dite diffuse lorsqu'un rayonnement incident sur le vitrage avec un angle d'incidence donné est réfléchi par le vitrage dans une pluralité de directions. La réflexion par un vitrage est dite spéculaire lorsqu'un rayonnement incident sur le vitrage avec un angle d'incidence donné est réfléchi par le vitrage avec un angle de réflexion égal à l'angle d'incidence. De manière analogue, la transmission à travers un vitrage est dite spéculaire lorsqu'un rayonnement incident sur le vitrage avec un angle d'incidence donné est transmis par le vitrage avec un angle de transmission égal à l'angle d'incidence.

De nombreuses tentatives ont été réalisées pour conférer à des vitrages standards transparents ou translucides des propriétés supplémentaires qui permettraient leur utilisation comme écran de projection ou de rétroprojection.

Un écran de projection comporte deux faces ou surfaces. Une face principale sur laquelle est projetée l'image provenant de la source lumineuse positionnée dans la même région de l'espace que la source lumineuse (projection directe). Une face opposée sur laquelle apparaît éventuellement par transparence l'image projetée sur la face principale.

Les écrans de rétroprojection disposent d'une face principale et d'une face opposée possédant les mêmes caractéristiques que celles des écrans de projection précédemment mentionnés. En revanche, un écran de rétroprojection se différencie d'un écran de projection par le fait que l'utilisateur et la source lumineuse ne sont pas situés dans la même région de l'espace mais se trouvent de part et d'autre de l'écran. La rétroprojection implique de placer nécessairement le projecteur derrière le vitrage et donc de disposer d'un local à cet endroit. Cette configuration est donc contraignante par la place qu'elle requiert pour sa mise en oeuvre.

L'utilisation de vitrages standards transparents en tant qu'écran de projection n'est pas envisageable. En effet, ces vitrages ne présentent pas de propriété de réflexion diffuse, ils ne permettent donc pas de former des images sur l'une quelconque de leurs faces et renvoient des reflets nets à la manière de miroirs.

L'utilisation de vitrages standards translucides en tant qu'écran de projection présente également des inconvénients. Ces vitrages translucides ne permettent pas de conserver une vision claire à travers le vitrage.

Une des solutions proposées pour améliorer les performances de vitrages translucides standards utilisés comme écran de projection consiste à utiliser des vitrages commutables entre un état transparent et un état diffusant. Ces vitrages sont basés sur l'utilisation de film fonctionnel comprenant des éléments actifs placé entre deux supports porteurs d'électrode. Les éléments actifs, quand le film est mis sous tension, s'orientent selon un axe privilégié, ce qui autorise la vision à travers le film fonctionnel. Hors tension, en l'absence d'alignement des éléments actifs, le film devient diffusant et empêche la vision.

De tels vitrages sont principalement utilisés actuellement comme écran pour la rétroprojection d'images à l'état diffusant car leurs propriétés ne leur permettent pas une utilisation convenable en tant qu'écran de projection. En effet, la projection directe d'image sur un vitrage commutable, par exemple à cristaux liquides, est de médiocre qualité de par les propriétés optiques inadaptées de ces vitrages telles que la faible réflexion diffuse. Mais surtout, la luminosité des images projetées sur ces vitrages décroit en général fortement lorsque l'angle d'observation augmente. L'angle de vue en projection, même à l'état diffusant, est très réduit rendant de tels vitrages difficilement utilisables comme écran de projection.

Une autre solution proposée notamment dans la demande de brevet EP 0 823 653, consiste en un vitrage associant un système à transmission/absorption lumineuse variable et un système à diffusion lumineuse variable. Ce vitrage peut être utilisé comme écran de rétroprojection ou de projection. Cependant, il est clairement indiqué que ces systèmes sont relativement satisfaisants en rétroprojection mais ne fonctionnent pas correctement en projection. La projection d'image en réflexion est de qualité médiocre avec là encore une faible luminosité et un faible angle de vue. Enfin, la projection d'image n'est possible que dans l'état diffusant. Dans l'état transparent, la projection directe est impossible.

On connait également des vitrages sérigraphiés utilisés comme écran de projection et de rétroprojection. Cependant, de tels vitrages ne présentent pas une transparence suffisante. Les motifs de sérigraphie de ces vitrages sont toujours visibles.

Enfin, on connait des vitrages de projection dits « holographiques », sur lesquels il est possible des projeter en rétroprojection des images depuis un certain angle tout en maintenant la transparence du vitrage. Cependant, ces vitrages sont limités à la rétroprojection, obligeant à placer le projecteur dans une position bien précise. De plus, ces produits ont un coût de fabrication extrêmement élevé.

Enfin, la société demanderesse a présenté dans le document WO 2012/104547 un élément en couches transparent ayant deux surfaces principales externes lisses, caractérisé en ce qu'il comprend :

- deux couches externes qui forment chacune une des deux surfaces principales externes de l'élément en couches et qui sont constituées de matériaux diélectriques, ayant sensiblement le même indice de réfraction, et
- une couche centrale intercalée entre les couches externes, cette couche centrale étant formée soit par une couche unique qui est une couche diélectrique d'indice de réfraction différent de celui des couches externes ou une couche métallique, soit par un empilement de couches qui comprend au moins une couche diélectrique, d'indice de réfraction différent de celui des couches externes ou une couche métallique, où chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents.

Cet élément transparent permet la projection mais la diffusion lumineuse n'est pas variable.

L'invention vise donc à pallier les inconvénients des vitrages connus de l'art antérieur en proposant un vitrage utilisable comme écran de projection ou de rétroprojection, ledit vitrage permettant notamment la projection directe d'images, visibles avec un grand angle de vue, tout en maintenant la transparence du vitrage.

L'invention permet également :

- de renforcer la luminosité de l'image projetée,
- de renforcer ou d'améliorer le contraste de l'image projetée,
- d'obtenir un excellent angle de vue, cette visualisation s'effectuant sans défauts optiques, c'est à dire avec une excellente netteté de l'image visualisée,
- de pouvoir contourner le phénomène de point chaud (« hot spot ») et de minimiser la gêne pouvant être occasionnée par la formation d'images parasites dues à la réflexion et la transmission de l'image projetée dans la pièce de projection.

L'invention concerne donc un procédé de projection ou de rétroprojection selon la revendication 1.

Dans le cadre de l'invention, on distingue les couches métalliques, d'une part, pour lesquelles la valeur de l'indice de réfraction est indifférente, et les couches transparentes d'autre part, de préférence diélectriques, d'indice de réfraction déterminé, pour lesquelles la différence d'indice de réfraction par rapport à celui des couches externes est à considérer.

Selon un mode de réalisation particulièrement avantageux, le vitrage comprend en outre au moins un revêtement antireflet.

Selon un autre mode de réalisation particulièrement avantageux, le système à diffusion lumineuse variable est de préférence électrocommandable. Ce système peut comprendre un film fonctionnel encadré par deux supports porteurs d'électrodes, de préférence transparent. Les électrodes sont directement au contact du film fonctionnel. Les électrodes comprennent de préférence chacune au moins une couche électroconductrice.

Le mode de réalisation préféré de l'invention combine les modes de réalisation avantageux.

L'élément transparent à réflexion diffuse permet d'obtenir un vitrage transparent en transmission et présentant une réflexion diffuse. Ces propriétés concourent à l'obtention d'une bonne luminosité des images projetées. Cet élément permet donc d'obtenir à la fois une vision nette à travers l'élément tout en limitant les réflexions spéculaires de type "miroir". La couche centrale favorise la réflexion diffuse permettant ainsi la projection directe d'une image sur l'un quelconque des côtés du vitrage incorporant l'élément en couches transparent, l'image se formant au niveau de la couche centrale.

L'ajout d'un revêtement antireflet permet de diminuer les réflexions multiples à l'intérieur de l'élément en couches et ainsi d'améliorer la qualité des images projetées.

L'association d'un système à diffusion lumineuse variable, lorsque ce système est dans son état transparent, ne modifie pas les propriétés du vitrage. En revanche, lorsque le système est dans son état diffusant, la qualité des images obtenues en projection directe est améliorée car la réflexion diffuse de l'élément en couches s'ajoute à la réflexion diffuse du système à diffusion lumineuse variable. Cette coopération synergique permet l'obtention d'une meilleure luminosité et d'un meilleur contraste de l'image projetée. La présence d'un système à diffusion lumineuse variable, de préférence électrocommandable, permet donc d'obtenir un vitrage commutable entre un état transparent et diffusant mais sur lequel la projection directe est possible avec un bon angle de vue aussi bien à l'état transparent que diffusant.

Le vitrage selon l'invention permet donc de réaliser la projection directe d'images. Les images projetées sont visibles avec un excellent angle de vue pouvant aller jusqu'à 180°. En effet, un observateur situé à un angle d'environ -90° ou +90° est capable de voir distinctement une image projetée ou de lire un texte projeté sur le vitrage de l'invention.

Les propriétés du vitrage, notamment le très large angle de vue, permettent de ne pas imposer de contrainte particulière sur la position du projecteur. Par exemple, le projecteur peut être placé de manière à ce que la réflexion spéculaire et/ou la transmission non diffuse de la lampe du projecteur ne soit pas visible pour les observateurs, sans dégrader la qualité de la projection. On évite ainsi le phénomène du point chaud.

Cette même propriété permet de minimiser la gêne pouvant être occasionnée par la formation d'images parasites. Les images parasites sont dues à :

- la réflexion spéculaire de la lumière projetée sur le vitrage, une image pouvant alors se former sur une autre surface de la pièce de projection,
- la transmission non diffuse de la lumière projetée à travers le vitrage, une image pouvant alors se former sur une autre surface de la pièce de projection.

Cette gêne pouvant être minimisée en plaçant le projecteur de façon à ce que ces images parasites soient formées à un endroit ne gênant pas l'observateur, par exemple sur le sol.

La solution de l'invention constitue une amélioration des vitrages existants pour une utilisation en tant qu'écran de projection d'un point vue technique mais également économique de par le faible surcout généré par la présence de l'élément en couches transparent à propriétés de réflexion diffuses.

Dans toute la description le vitrage selon l'invention est considéré posé horizontalement, avec sa première face orientée vers le bas définissant une surface principale externe inférieure 10 et sa seconde face, opposée à la première face, orientée vers le haut définissant une surface principale externe supérieure 20 ; les sens des expressions « au-dessus » et « en-dessous » sont ainsi à considérer par rapport à cette orientation. A défaut de stipulation spécifique, les expressions « au-dessus » et « en-dessous » ne signifient pas nécessairement que deux éléments, couches, revêtements et/ou systèmes sont disposés au contact l'un de l'autre. Les termes « inférieur » et « supérieur » sont utilisés ici en référence à ce positionnement.

Le vitrage peut comprendre en outre au moins une couche additionnelle positionnée au-dessus ou en-dessous de l'élément en couches et/ou éventuellement du système à diffusion lumineuse variable. La ou lesdites couches additionnelles du vitrage peuvent être constituées de matériaux transparents, de préférence diélectriques, ayant tous sensiblement le même indice de réfraction ou ayant des indices de réfraction différents que les matériaux transparents, de préférence diélectriques, des couches externes de l'élément en couches. Ces couches additionnelles sont de préférence choisies parmi :

- les substrats transparents choisis parmi les polymères, les verres ou les céramiques comprenant deux surfaces principales lisses,
- les matériaux durcissables initialement dans un état visqueux, liquide ou pâteux adapté à des opérations de mise en forme,
- les intercalaires en matière plastique thermoformable ou sensible à la pression.

Le vitrage comprend deux surfaces principales externes supérieure et inférieure 10, 20. Les surfaces principales externes du vitrage peuvent être confondues avec les surfaces principales externes de l'élément en couches, par exemple, si le vitrage ne comprend pas de couche additionnelle. En revanche, si le vitrage comprend :

- au moins une couche additionnelle supérieure, la surface principale externe supérieure du vitrage sera confondue avec la surface principale externe supérieure de la couche additionnelle supérieure,
- au moins une couche additionnelle inférieure, la surface principale externe inférieure du vitrage sera confondue avec la surface principale externe inférieure de la couche additionnelle inférieure.

Au sens de l'invention le terme « indice » fait référence à l'indice optique de réfraction, mesuré à la longueur d'onde de 550 nm.

Selon l'invention, une couche mince est une couche d'épaisseur inférieure à 1 $\mu$m.

Deux matériaux transparents ou couches transparentes, de préférence diélectriques, ont sensiblement le même indice de réfraction, ou ont leurs indices de réfraction sensiblement égaux, lorsque les deux matériaux transparents, de préférence diélectriques, ont des indices de réfraction dont la valeur absolue de la différence entre leurs indices de réfraction à 550 nm est inférieure ou égale à 0,15. Selon l'invention, la valeur absolue de la différence d'indice de réfraction à 550 nm entre les matériaux transparents, de préférence diélectriques, constitutifs des deux couches externes de l'élément en couches est par ordre de préférence croissant : inférieure ou égale à 0,05, inférieur ou égale à 0,02, inférieure ou égale à 0,018, inférieure ou égale à 0,015, inférieure ou égale à 0,01, inférieure ou égale à 0,005.

Deux matériaux transparents ou couches transparentes, de préférence diélectriques, ont des indices de réfraction différents lorsque la valeur absolue de la différence entre leurs indices de réfraction à 550 nm est strictement supérieure à 0,15. Selon une caractéristique avantageuse, la valeur absolue de la différence d'indice de réfraction à 550 nm entre, d'une part, les couches externes et, d'autre part, au moins une couche transparente d'indice de réfraction $(n3, n3_1, n3_2, ..., n3_k)$ de la couche centrale, est supérieure ou égale à 0,3, de préférence supérieure ou égale à 0,5, encore de préférence supérieure ou égale à 0,8.

Cette différence d'indice de réfraction relativement importante intervient au niveau d'au moins une surface de contact texturée interne à l'élément en couches. Cela permet de favoriser la réflexion de rayonnement sur cette surface de contact texturée, c'est-à-dire une réflexion diffuse du rayonnement par l'élément en couches.

La surface de contact entre deux couches adjacentes est l'interface entre les deux couches adjacentes.

Un élément transparent est un élément à travers lequel il y a une transmission de rayonnement au moins dans les domaines de longueurs d'onde utiles pour l'application visée de l'élément. De préférence, l'élément est transparent au moins dans le domaine de longueurs d'onde du visible.

Selon l'invention, les matériaux transparents ou les couches transparentes se réfèrent notamment :

- aux couches externes 2, 4 constituées de matériaux transparents d'indice de réfraction (n2, n4),
- à la couche centrale 3 formée par une couche transparente d'indice de réfraction (n3),
- à l'empilement de couches $(3_1, 3_2, ..., 3_k)$ qui comprend au moins une couche transparente d'indice de réfraction $(n3_1, n3_2, ...$ ou $n3_k)$ différent de celui des couches externes.

De préférence, les matériaux transparents ou couches transparentes sont de nature organique ou minérale. De préférence, les matériaux transparents ou couches transparentes ne sont pas métalliques. Les matériaux transparents ou couches transparentes minérales peuvent être choisis parmi les oxydes, nitrures ou halogénures d'un ou plusieurs métaux de transition, non-métaux ou métaux alcalino-terreux. Les métaux de transition, non-métaux ou métaux alcalino-terreux sont choisis de préférence parmi le silicium, le titane, l'étain, le zinc, l'indium, l'aluminium, le molybdène, le niobium, le zirconium, le magnésium. Les matériaux ou couches diélectriques organiques sont choisis parmi les polymères.

Ces matériaux transparents ou couches transparentes sont de préférence diélectriques. Un matériau ou couche diélectrique est un matériau ou une couche non métallique. On considère qu'un matériau ou couche diélectrique est un matériau ou une couche de conductivité électrique faible, de préférence inférieure à $10^4$ S/m et éventuellement inférieure à 100 S/m. On peut également considérer qu'un matériau ou couche diélectrique est un matériau ou une couche présentant une résistivité plus élevée que celle des métaux. Les matériaux ou couches diélectriques de l'invention présentent une résistivité supérieure à 1 ohm centimètre ($\Omega$.cm), de préférence supérieure à 10 $\Omega$.cm et éventuellement supérieure $10^4$ $\Omega$.cm.

Selon un mode de réalisation particulier de l'invention, l'élément en couches transparent est utilisé comme support porteur d'électrode. Par exemple, l'élément en couches transparent peut constituer l'un des supports porteurs d'électrode du système à diffusion lumineuse variable. La couche externe inférieure assure alors la fonction de support et l'ensemble constitué de la couche centrale et de la couche externe supérieure assure la fonction d'électrode.

Selon ce mode de réalisation, la couche centrale comporte de préférence au moins une couche métallique. Lorsque les couches situées au-dessus de cette couche sont des couches transparentes d'indice de réfraction n4, $n3_1$, $n3_2$, ..., $n3_k$, ces couches doivent être dans une certaine mesure conductrices. Les matériaux transparents ou couches transparentes peuvent donc être des couches électriquement conductrices. En effet, ces matériaux transparents ou couches transparentes doivent présenter une résistivité suffisamment « faible » pour ne pas rendre isolante l'électrode constituée de cette ou ces couches et de la couche centrale de l'élément en couches. Ces couches ou matériaux ont de préférence une résistivité inférieure à 1 ohm.cm, de préférence inférieure à $10^{-2}$ ohm.cm.

Une surface texturée ou rugueuse est une surface pour laquelle les propriétés de surface varient à une échelle plus grande que la longueur d'onde du rayonnement incident sur la surface. Le rayonnement incident est alors transmis et réfléchi de manière diffuse par la surface. De préférence, une surface texturée ou rugueuse selon l'invention présente un paramètre de rugosité correspondant à l'écart moyen arithmétique Ra d'au moins 0,5 $\mu$m, notamment comprise entre 1 et 5 $\mu$m (correspondant à la moyenne arithmétique de toutes les distances absolues du profil de rugosité R mesurée à partir d'une ligne médiane du profil sur une longueur d'évaluation).

Une surface lisse est une surface pour laquelle les irrégularités de surface sont telles que le rayonnement n'est pas dévié par ces irrégularités de surface. Le rayonnement incident est alors transmis et réfléchi de manière spéculaire par la surface. De préférence, une surface lisse est une surface pour laquelle les irrégularités de surface sont de dimensions inférieures à la longueur d'onde du rayonnement incident sur la surface ou très supérieures (ondulations à grande échelle).

Toutefois, les couches externes ou les couches additionnelles peuvent présenter certaines irrégularités de surface à condition que ces couches soient en contact d'une ou plusieurs couches additionnelles constituées de matériaux diélectriques ayant sensiblement le même indice de réfraction et qui présentent, sur leur face opposée à celle en contact avec ladite couche présentant certaines irrégularités, une surface lisse telle que définie ci-dessus.

De préférence, une surface lisse est une surface présentant soit un paramètre de rugosité correspondant à l'écart moyen arithmétique Ra inférieur à 0,1 $\mu$m, de préférence inférieur à 0,01 $\mu$m, soit des pentes inférieures à 10°.

Un vitrage comprend au moins un substrat transparent organique ou minéral.

L'élément en couches peut être rigide ou flexible. Il peut s'agir en particulier d'un vitrage, constitué par exemple à base de verre ou de matériau polymère. Il peut s'agir également d'un film flexible à base de matériau polymère, notamment apte à être rapporté sur une surface afin de lui conférer des propriétés de réflexion diffuse tout en préservant ses propriétés de transmission.

Le demandeur a découvert que les propriétés particulièrement avantageuses de l'élément en couches de l'invention sont dues à l'accord d'indice entre les couches externes c'est-à-dire au fait que ces deux couches ont sensiblement le même indice de réfraction. Selon l'invention, l'accord d'indice ou écart d'indice correspond à la valeur absolue de la différence d'indice de réfraction à 550 nm entre les matériaux transparents, de préférence diélectriques, constitutifs des deux couches externes de l'élément en couches. Plus l'écart d'indice est faible, plus la vision sera nette au travers du vitrage. L'extrême netteté de la vision à travers l'élément en couches est due à l'accord d'indice le plus ajusté possible.

Grâce à l'invention, on obtient une transmission spéculaire et une réflexion diffuse d'un rayonnement incident sur l'élément en couches. La transmission spéculaire garantit une vision nette à travers l'élément en couches. La réflexion diffuse permet d'éviter les reflets nets sur l'élément en couches et les risques d'éblouissement.

La réflexion diffuse sur l'élément en couches provient de ce que chaque surface de contact entre deux couches adjacentes qui sont l'une transparent et l'autre métallique, ou qui sont deux couches transparentes d'indices de réfraction différents, est texturée. Ainsi, lorsqu'un rayonnement incident sur l'élément en couches atteint une telle surface de contact, il est réfléchi par la couche métallique ou du fait de la différence d'indice de réfraction entre les deux couches transparentes et, comme la surface de contact est texturée, la réflexion est diffuse.

La transmission spéculaire provient de ce que les deux couches externes de l'élément en couches ont des surfaces principales externes lisses et sont constituées de matériaux ayant sensiblement le même indice de réfraction, et de ce que chaque surface de contact texturée entre deux couches adjacentes de l'élément en couches qui sont l'une transparente d'indice de réfraction (n2, n4, n3, $n3_1$, $n3_2$, ...ou $n3_k$) et l'autre métallique, ou qui sont deux couches transparentes d'indices de réfraction différents, est parallèle aux autres surfaces de contact texturées entre deux couches adjacentes qui sont l'une transparente d'indice de réfraction (n2, n4, n3, $n3_1$, $n3_2$, ... ou $n3_k$) et l'autre métallique ou qui sont deux couches transparentes d'indices de réfraction différents.

Les surfaces externes lisses de l'élément en couches permettent une transmission spéculaire de rayonnement à chaque interface air/couche externe, c'est-à-dire permettent l'entrée d'un rayonnement depuis l'air dans une couche externe, ou la sortie d'un rayonnement depuis une couche externe dans l'air, sans modification de la direction du rayonnement.

Le parallélisme des surfaces de contact texturées implique que la ou chaque couche constitutive de la couche centrale qui est transparente d'indice de réfraction différent de celui des couches externes, ou qui est métallique, présente une épaisseur uniforme perpendiculairement aux surfaces de contact de la couche centrale avec les couches externes.

Cette uniformité de l'épaisseur peut être globale sur toute l'étendue de la texture, ou locale sur des tronçons de la texture. En particulier, lorsque la texture présente des variations de pente, l'épaisseur entre deux surfaces de contact texturées consécutives peut changer, par tronçon, en fonction de la pente de la texture, les surfaces de contact texturées restant toutefois toujours parallèles entre elles. Ce cas se présente notamment pour une couche déposée par pulvérisation cathodique, où l'épaisseur de la couche est d'autant plus faible que la pente de la texture augmente. Ainsi, localement, sur chaque tronçon de texture ayant une pente donnée, l'épaisseur de la couche reste constante, mais l'épaisseur de la couche est différente entre un premier tronçon de texture ayant une première pente et un deuxième tronçon de texture ayant une deuxième pente différente de la première pente.

De manière avantageuse, afin d'obtenir le parallélisme des surfaces de contact texturées à l'intérieur de l'élément en couches, la couche ou chaque couche constitutive de la couche centrale est une couche déposée par pulvérisation cathodique. En effet, la pulvérisation cathodique, en particulier la pulvérisation cathodique assistée par un champ magnétique, garantit que les surfaces délimitant la couche soient parallèles entre elles, ce qui n'est pas le cas d'autres techniques de dépôt telles que l'évaporation ou le dépôt chimique en phase vapeur (CVD), ou encore le procédé sol-gel. Or, le parallélisme des surfaces de contact texturées à l'intérieur de l'élément en couches est essentiel pour obtenir une transmission spéculaire à travers l'élément.

Un rayonnement incident sur une première couche externe de l'élément en couches traverse cette première couche externe sans modification de sa direction. Du fait de la différence de nature, transparente d'indice de réfraction (n2, n4, n3, $n3_1$, $n3_2$, ...ou $n3_k$) ou métallique, ou de la différence d'indice de réfraction entre la première couche externe et au moins une couche de la couche centrale, le rayonnement est ensuite réfracté dans la couche centrale. Comme, d'une part, les surfaces de contact texturées entre deux couches adjacentes de l'élément en couches qui sont l'une transparente et l'autre métallique, ou qui sont deux couches transparentes d'indices de réfraction différents, sont toutes parallèles entre elles et, d'autre part, la deuxième couche externe a sensiblement le même indice de réfraction que la première couche externe, l'angle de réfraction du rayonnement dans la deuxième couche externe à partir de la couche centrale est égal à l'angle d'incidence du rayonnement sur la couche centrale à partir de la première couche externe, conformément à la loi de Snell-Descartes pour la réfraction.

Le rayonnement ressort donc de la deuxième couche externe de l'élément en couches selon une direction qui est la même que sa direction d'incidence sur la première couche externe de l'élément. La transmission du rayonnement par l'élément en couches est ainsi spéculaire. On obtient donc ainsi une vision claire à travers l'élément en couches, c'est-à-dire sans que l'élément en couches soit translucide, grâce aux propriétés de transmission spéculaire de l'élément en couches.

Selon un aspect de l'invention, on tire parti des propriétés de réflexion diffuse de l'élément en couches pour réfléchir une grande partie du rayonnement, dans une pluralité de directions, du côté d'incidence du rayonnement. Cette forte réflexion diffuse est obtenue tout en ayant une vision claire à travers l'élément en couches, c'est-à-dire sans que l'élément en couches soit translucide, grâce aux propriétés de transmission spéculaire de l'élément en couches. Un tel élément en couches transparent à forte réflexion diffuse présente un intérêt certain pour des applications telles que les écrans d'affichage ou de projection.

Selon un aspect de l'invention, au moins l'une des deux couches externes de l'élément en couches est constituée de matériaux diélectriques et est choisie parmi :

- les substrats transparents dont l'une des surfaces principales est texturée et l'autre surface principale est lisse, de préférence choisis parmi les polymères, les verres, les céramiques,
- une couche de matériau transparent, de préférence diélectrique, choisie parmi les oxydes, nitrures ou halogénures d'un ou plusieurs métaux de transition, non-métaux ou métaux alcalino-terreux,
- une couche à base de matériaux durcissables initialement dans un état visqueux, liquide ou pâteux adapté à des opérations de mise en forme comprenant :

    - les matériaux photoréticulables et/ou photopolymérisables,
    - les couches déposées par un procédé sol-gel,
    - les couches d'émail,

- les intercalaires ou feuillets de matière plastique thermoformable ou sensible à la pression pouvant être de préférence à base de polymères choisis parmi les polybutyrales de vinyle (PVB), les polychlorures de vinyle (PVC), les polyuréthanes (PU), les polyéthylènes téréphtalate ou les éthylènes vinyle acétate (EVA).

La texturation de l'une des surfaces principales des substrats transparents peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat ; par abrasion au moyen de particules ou de surfaces abrasives, en particulier par sablage ; par traitement chimique, notamment traitement à l'acide dans le cas d'un substrat en verre ; par moulage, notamment moulage par injection dans le cas d'un substrat en polymère thermoplastique ; par gravure.

Lorsque le substrat transparent est en polymère, il peut être rigide ou flexible. Des exemples de polymères convenant selon l'invention comprennent, notamment :

- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP) ;
- les résines photoréticulables et/ou photopolymérisables, telles que les résines thiolène, polyuréthane, uréthane-acrylate, polyester-acrylate et
- les polythiouréthanes.

Ces polymères présentent en général une gamme d'indice de réfraction variant de 1,3 à 1,7.

Des exemples de substrats en verre déjà texturés directement utilisables en tant que couche externe de l'élément en couches, comprennent :

- les substrats en verre commercialisés par la société Saint-Gobain Glass dans la gamme SATINOVO®, qui sont déjà texturés et présentent sur l'une de leurs surfaces principales une texture obtenue par sablage ou attaque acide ;
- les substrats en verre commercialisés par la société Saint-Gobain Glass dans la gamme ALBARINO® S, P ou G ou dans la gamme MASTERGLASS®, qui présentent sur l'une de leurs surfaces principales une texture obtenue par laminage,
- les substrats en verre à haut indice texturés par sablage tel que du verre flint par exemple commercialisés par la société Schott sous les références SF6 (n=1,81), 7SF57 (n=1,85), N-SF66 (n=1,92), P-SF68 (n=2,00).

Lorsque chacune des deux couches externes de l'élément en couches est formée par un substrat transparent, les deux substrats transparents ont des textures complémentaires l'une par rapport à l'autre.

La couche externe texturée de l'élément en couches peut être simplement constituée d'une couche de matériau transparent, de préférence diélectrique, choisi parmi les oxydes, nitrures ou halogénures d'un ou plusieurs métaux de transition, non-métaux ou métaux alcalino-terreux. Les métaux de transition, non-métaux ou métaux alcalino-terreux sont de préférence choisis parmi le silicium, le titane, l'étain, le zinc, l'aluminium, le molybdène, le niobium, le zirconium, le magnésium. Cette couche mince de matériau diélectrique peut être constituée de matériaux choisis parmi des matériaux à haut indice de réfraction tel que $Si_3N_4$, AIN, NbN, $SnO_2$, ZnO, SnZnO, $Al_2O_3$, MoOa, NbO, $TiO_2$, $ZrO_2$ et des matériaux à bas indices de réfraction telle que $SiO_2$, $MgF_2$, $AlF_3$. Cette couche est de préférence utilisée comme couche externe supérieure de l'élément en couches et peut être déposée par une technique de dépôt par pulvérisation cathodique notamment assistée par un champ magnétique, par évaporation, par dépôt chimique en phase vapeur (CVD), sur un vitrage comprenant déjà une couche externe inférieure et d'une couche centrale. En revanche, les dépôts réalisés par pulvérisation cathodique sont conformes à la surface. La couche ainsi déposée doit donc ensuite être polie de façon à obtenir une surface externe principale plane. Ces couches diélectriques comprennent donc une surface texturée épousant la rugosité de surface de la couche centrale et une surface principale externe opposée à cette surface qui est plane.

Les couches externes de l'élément en couche peuvent également être à base de matériaux durcissables initialement dans un état visqueux, liquide ou pâteux adapté à des opérations de mise en forme. De préférence, ces couches sont utilisées comme couches externes supérieures de l'élément en couches.

La couche déposée initialement dans un état visqueux, liquide ou pâteux peut être une couche de matériau photoréticulable et/ou photopolymérisable. De préférence, ce matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/ comonomères/pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide. Des exemples de résines photoréticulables et/ou photopolymérisables utilisables dans la présente invention comprennent les produits commercialisés par la société Norland Optics sous la marque NOA® Norland Optical Adhesives, comme par exemple les produits NOA®65 et NOA®75.

En variante, la couche externe déposée initialement dans un état visqueux, liquide ou pâteux peut être une couche sol-gel déposée par un procédé sol-gel comprenant une matrice à base de silice obtenue selon un procédé sol-gel.

Le procédé sol-gel consiste, dans un premier temps, à préparer une solution dite « solution sol-gel » contenant des précurseurs qui donnent lieu en présence d'eau à des réactions de polymérisation. Lorsque cette solution sol-gel est déposée sur une surface, de par la présence d'eau dans la solution sol-gel ou au contact de l'humidité ambiante, les précurseurs s'hydrolysent et se condensent pour former un réseau emprisonnant le solvant. Ces réactions de polymérisation entraînent la formation d'espèces de plus en plus condensées, qui conduisent à des particules colloïdales formant des sols puis des gels. Le séchage et la densification de ces gels, à une température de l'ordre de quelques centaines de degrés, conduit, en présence de précurseur à base de silice, à une couche sol-gel correspondant à un verre dont les caractéristiques sont semblables à celles d'un verre classique.

De préférence, les couches sol-gel sont utilisées comme couche externe supérieure de l'élément en couches. Du fait de leur viscosité, les solutions sol-gel, sous forme d'une solution colloïdale ou d'un gel, peuvent être déposées de manière aisée sur la surface principale texturée de la couche centrale opposée à la première couche externe, en se conformant à la texture de cette surface. La couche sol-gel va venir « combler » la rugosité de la couche centrale. En effet, cette couche comprend une surface épousant la rugosité de surface de la couche centrale qui est ainsi texturée et une surface principale externe opposée à cette surface qui est plane. Les couches déposées par un procédé sol-gel assurent donc une planarisation de la surface de l'élément en couches.

Les couches sol-gel peuvent comprendre une matrice à base de silice et être obtenues à partir de précurseurs tels que des alcoxydes de silicium $Si(OR)_4$. Les couches sol-gel correspondent alors à des verres de silice.

Le dépôt peut se faire selon l'une des techniques suivantes :

- le trempage-retrait (connu sous la terminologie anglaise « dip-coating ») ;
- l'enduction centrifuge (connue sous la terminologie anglaise « spin-coating ») ;
- l'enduction laminaire (connue sous la terminologie anglaise « laminar-flow-coating ou meniscus coating ») ;
- la pulvérisation (connue sous la terminologie anglaise « spray-coating ») ;
- l'épandage (connu sous la terminologie anglaise « soak coating ») ;
- l'enduction au rouleau (connue sous la terminologie « roll- to- roll process ») ;
- l'enduction au pinceau (connue sous la terminologie anglaise « paint coating ») ;
- la sérigraphie (connue sous la terminologie anglaise « screen printing »).

Le dépôt est de préférence effectué par pulvérisation avec atomisation pneumatique. La température de séchage de la couche sol-gel, peut varier de 0 à 200°C, de préférence de 100°C à 150°C, de préférence encore de 120 à 170°C.

Les couches déposées par procédé sol-gel assurent une planarisation de la surface de l'élément en couches. Cependant, lorsque l'on utilise de telles couches de planarisation, la surface principale externe de la couche sol-gel peut présenter certaines irrégularités de surface à grande échelle. Pour rétablir le caractère lisse de la couche externe de l'élément en couches, il est donc possible de venir positionner au contact de cette surface présentant certaines irrégularités, plusieurs couches additionnelles ayant sensiblement le même indice de réfraction que ladite couche externe, telle qu'une feuille en matière plastique et un substrat de verre plat.

Un autre exemple de couche externe peut être obtenu par dépôt d'un émail à base d'une fritte de verre sur un substrat de verre par exemple sodocalcique. Pour obtenir l'émail, on prépare tout d'abord une formulation comprenant une fritte de verre par broyage du verre à des granulométries de quelques microns (par exemple D50 = 2 microns) suivi de l'empâtage de ce verre broyé à l'aide d'une matrice organique. Puis, on dépose sur le substrat de verre, une couche de cette composition par une technique de dépôt par voie liquide telle que la sérigraphie ou le slot coating. Enfin, on cuit cette couche à une température plus élevée d'au moins 100°C par rapport à la température de transition vitreuse de la fritte de verre utilisée dans la composition. La couche d'émail correspond à une couche à base de matériaux durcissables initialement dans un état liquide, visqueux ou pâteux adapté à des opérations de mise en forme.

La couche d'émail peut ensuite être rendue rugueuse ou texturée par attaque dans des solutions de pH extrêmes, c'est-à-dire soit fortement acides (pH<2) soit fortement basique (pH>12). Dans ce cas, on considère que le substrat de verre est une couche additionnelle de l'élément en couches et la couche d'émail constitue la couche externe de l'élément en couche.

La couche d'émail peut également être utilisée comme couche externe supérieure. Dans ce cas, la couche externe supérieure texturée de l'élément en couches peut être simplement constituée d'une composition d'émail à base de fritte de verre déposée par une technique de dépôt par voie liquide (telle que la sérigraphie ou le slot coating) sur un support déjà revêtu d'une couche externe inférieure et d'une couche centrale. La couche d'émail va venir « combler » la rugosité de la couche centrale. Cette couche comprend une surface épousant la rugosité de surface de la couche centrale qui est ainsi texturée et une surface principale externe opposée à cette surface qui est plane. Toutefois, dans ce cas, au regard des températures de cuisson élevées pour faire fondre la composition comprenant la fritte de verre, il faut s'assurer que les matériaux employés pour les autres couches de l'éléments en couches, c'est-à-dire les matériaux de la couche externe revêtue de la couche centrale, sont susceptibles de ne pas se déformer suite à cette étape de cuisson. Par exemple, si on utilise un support constitué d'un substrat de verre comprenant un émail texturé comme couche externe inférieure, il est préférable que la composition d'émail comprenant la fritte de verre destinée à venir former la couche externe supérieure présente une température de transition vitreuse Tg inférieure à la température de transition vitreuse de la composition de fritte utilisée pour former l'émail de la couche externe inférieure. Ainsi, la couche externe inférieure n'est pas déformée lors de l'étape de cuisson de la couche externe supérieure.

La couche externe peut comprendre une couche à base d'un intercalaire ou feuille en matière plastique thermoformable ou sensible à la pression texturée par compression et/ou chauffage. Cette couche à base de matériau polymère peut être, en particulier, une couche à base de polybutyral de vinyle (PVB), d'éthylène vinylacétate (EVA), de polyuréthane (PU), de polyéthylène téréphtalate (PET), de polychlorure de vinyle (PVC). Cette couche à base de matériau polymère peut jouer le rôle d'un intercalaire de feuilletage assurant une liaison avec une couche additionnelle tel qu'un substrat transparent d'indice de réfraction sensiblement égal à celui de la première couche externe.

L'épaisseur de la couche externe est de préférence comprise entre 0,2 $\mu$m et 6 mm, mieux entre 1 $\mu$m et 6 mm et varie selon le choix du matériau.

Les substrats en verre plats ou texturés ont de préférence une épaisseur comprise entre 0,4 et 6 mm, de préférence 0,7 et 4 mm.

Les substrats en polymère plats ou texturés ont de préférence une épaisseur comprise entre 0,020 et 2 mm, de préférence 0,025 et 0,25 mm.

Les couches externes constituées d'une couche de matériau transparent, de préférence diélectrique, choisi parmi les oxydes, nitrures ou halogénures d'un ou plusieurs métaux de transition, non-métaux ou métaux alcalino-terreux, ont de préférence une épaisseur comprise entre 0,2 et 20 $\mu$m, de préférence 0,5 et 2 $\mu$m.

Les couches à base de matériaux durcissables initialement dans un état visqueux, liquide ou pâteux adapté à des opérations de mise en forme ont de préférence une épaisseur comprise entre 0,5 et 50 $\mu$m, de préférence entre 0,5 et 20 $\mu$m. Les couches à base de matériaux photoréticulables et/ou photopolymérisables ont de préférence une épaisseur comprise entre 0,5 et 20 $\mu$m, de préférence 0,7 et 10 $\mu$m. Les couches déposées par un procédé sol-gel ont de préférence une épaisseur comprise entre 0,5 et 50 $\mu$m, de préférence entre 10 et 15 $\mu$m. Les couches d'émail à base de fritte de verre ont de préférence une épaisseur comprise entre 3 et 30 $\mu$m, de préférence 5 et 20 $\mu$m.

Les couches à base d'un intercalaire ou feuille en matière plastique ont de préférence une épaisseur comprise entre 10 $\mu$m et 2 mm, de préférence comprise entre 0,3 et 1 mm.

Les matériaux transparents ou couches transparentes utilisés comme couche externe peuvent avoir un indice de réfraction compris entre 1,49 et 1,7, de préférence compris entre 1,49 et 1,54 ou compris entre 1,51 et 1,53, par exemple dans le cas de l'utilisation d'un verre standard.

La qualité d'un écran constitué par un vitrage dépend des propriétés de transmission et de réflexion du vitrage. En règle générale, plus la transmission lumineuse est faible, plus la réflexion lumineuse est élevée, meilleure sera la qualité d'un écran utilisé en projection directe. Toutefois, selon l'invention, on cherche à conserver une bonne transparence en transmission.

Selon un mode de réalisation, la couche centrale comprend au moins une couche réfléchissante favorisant la réflexion de la lumière, c'est-à-dire une couche présentant une réflexion importante du rayonnement visible. Cette propriété, combinée à la structure particulière de l'élément en couches, permet une réflexion diffuse de la lumière d'où d'excellentes propriétés pour une utilisation en tant qu'écran de projection. Toutefois, l'utilisation d'une couche réfléchissante se fait au détriment de la transmission lumineuse au travers du vitrage. Par conséquent, le choix des propriétés de réflexion et de transmission de la couche centrale doit se faire en fonction des attentes entre une bonne transparence du vitrage et l'obtention d'une bonne luminosité de l'image projetée.

La couche ou l'empilement de couches de la couche centrale de l'élément en couches peut comprendre :

- au moins une couche adhésive en polymère transparent,
- au moins une couche mince constituée d'un matériau transparent, de préférence diélectrique choisi parmi les oxydes, nitrures ou halogénures d'un ou plusieurs métaux de transition, non-métaux ou métaux alcalino-terreux,
- au moins une couche mince métallique, notamment une couche mince d'argent, d'or, de cuivre, de titane, de niobium, de silicium, d'aluminium, d'alliage nickel-chrome (NiCr), d'acier inoxydable, ou de leurs alliages.

La couche mince constituée d'un matériau transparent, de préférence diélectrique peut être choisie parmi :

- au moins une couche mince constituée d'un matériau transparent, de préférence diélectrique, à haut indice de réfraction, différent de l'indice de réfraction des couches externes, tel que $Si_3N_4$, AIN, NbN, $SnO_2$, ZnO, SnZnO, $Al_2O_3$, $MoO_3$, NbO, $TiO_2$, $ZrO_2$,
- au moins une couche mince constituée d'un matériau transparent, de préférence diélectrique, à bas indice de réfraction, différent de l'indice de réfraction des couches externes, tel que $SiO_2$, $MgF_2$, $AlF_3$.

Lorsque la couche centrale est une couche adhésive en polymère transparent, les couches externes sont assemblées entre elles au moyen de cette couche centrale formée par une couche de matériau diélectrique d'indice de réfraction différent de celui des couches externes.

Le choix de l'épaisseur de la couche centrale dépend d'un certain nombre de paramètres. De manière générale, on considère que l'épaisseur totale de la couche centrale est inférieure à 1 $\mu$m, de préférence comprise entre 5 et 200 nm et l'épaisseur d'une couche de la couche centrale est comprise entre 1 et 200 nm.

Lorsque la couche centrale comprend une couche métallique, l'épaisseur d'une couche est de préférence comprise entre 5 à 40 nm, mieux comprise entre 6 et 30 nm et encore mieux de 6 à 20 nm. De préférence, la couche centrale comprend une couche métallique à base d'argent, d'or, de nickel, de chrome ou d'alliage métallique, par exemple en acier, de préférence inoxydable.

Lorsque la couche centrale comprend une couche diélectrique, par exemple de $TiO_2$, elle présente de préférence une épaisseur comprise entre 20 et 100 nm et mieux de 55 et 65 nm et/ou un indice de réfraction compris entre 2,2 et 2,4.

De manière avantageuse, la composition de la couche centrale de l'élément en couches peut être ajustée pour conférer des propriétés supplémentaires à l'élément en couches, par exemple des propriétés thermiques, de type contrôle solaire et/ou basse émissivité. Ainsi, dans un mode de réalisation, la couche centrale de l'élément en couches est un empilement transparent de couches minces comprenant une alternance de « n » couches fonctionnelles métalliques, notamment de couches fonctionnelles à base d'argent ou d'alliage métallique contenant de l'argent, et de « (n + 1) » revêtements antireflet, avec *n* ≥1, où chaque couche fonctionnelle métallique est disposée entre deux revêtements antireflet.

De manière connue, un tel empilement à couche fonctionnelle métallique présente des propriétés de réflexion dans le domaine du rayonnement solaire et/ou dans le domaine du rayonnement infrarouge de grande longueur d'onde. Dans un tel empilement, les couches fonctionnelles métalliques déterminent essentiellement les performances thermiques, tandis que les revêtements antireflets qui les encadrent agissent sur l'aspect optique de manière interférentielle. En effet, si les couches fonctionnelles métalliques permettent d'obtenir des performances thermiques souhaitées même à une faible épaisseur géométrique, de l'ordre de 10 nm pour chaque couche fonctionnelle métallique, elles s'opposent toutefois fortement au passage de rayonnement dans le domaine de longueurs d'onde du visible. Dès lors, des revêtements antireflets de part et d'autre de chaque couche fonctionnelle métallique sont nécessaires pour assurer une bonne transmission lumineuse dans le domaine du visible. En pratique, c'est l'empilement global de la couche centrale, comprenant les couches minces métalliques et les revêtements antireflet, qui est optimisé optiquement. De manière avantageuse, l'optimisation optique peut être faite sur l'empilement global de l'élément en couches, c'est-à-dire incluant les couches externes positionnées de part et d'autre de la couche centrale.

L'élément en couches obtenu combine alors des propriétés optiques, à savoir des propriétés de transmission spéculaire et de réflexion diffuse d'un rayonnement incident sur l'élément en couches, et des propriétés thermiques, à savoir des propriétés de contrôle solaire et/ou de basse émissivité. Le vitrage comprenant un tel élément comprend outre sa fonction d'écran de projection ou de rétroprojection, une fonction de protection solaire et/ou d'isolation thermique de bâtiments ou véhicules.

Lorsque la couche centrale est une couche adhésive en polymère transparent, les couches externes sont assemblées entre elles au moyen de cette couche centrale formée par une couche de matériau diélectrique d'indice de réfraction différent de celui des couches externes.

Selon un aspect de l'invention, la texture de chaque surface de contact entre deux couches adjacentes de l'élément en couches qui sont l'une transparente, de préférence diélectrique et l'autre métallique, ou qui sont deux couches transparentes d'indices de réfraction différents, est formée par une pluralité de motifs en creux ou en saillie par rapport à un plan général de la surface de contact. De préférence, la hauteur moyenne des motifs de chaque surface de contact entre deux couches adjacentes de l'élément en couches qui sont l'une transparent, de préférence diélectrique et l'autre métallique, ou qui sont deux couches transparentes d'indices de réfraction différents, est comprise entre 1 micromètre et 1 millimètre. Au sens de l'invention, la hauteur moyenne des motifs de la surface de contact est définie comme la moyenne arithmétique des distances $y_i$ en valeur absolue prises entre le sommet et le plan général de la surface de contact pour chaque motif de la surface de contact, égale à

$$\frac{1}{n}\sum_{i=1}^{n}\left|y_i\right|.$$

Les motifs de la texture de chaque surface de contact entre deux couches adjacentes de l'élément en couches qui sont l'une transparente, de préférence diélectrique et l'autre métallique, ou qui sont deux couches transparentes d'indices de réfraction différents, peuvent être répartis de manière aléatoire sur la surface de contact. En variante, les motifs de la texture de chaque surface de contact entre deux couches adjacentes de l'élément en couches qui sont l'une transparente et l'autre métallique, ou qui sont deux couches transparentes d'indices de réfraction différents, peuvent être répartis de manière périodique sur la surface de contact. Ces motifs peuvent être, notamment, des cônes, des pyramides, des rainures, des nervures, des vaguelettes.

Selon un aspect de l'invention, pour chaque couche de la couche centrale qui est encadrée par des couches de nature, diélectrique ou métallique, différente de la sienne ou d'indices de réfraction différents du sien, l'épaisseur de cette couche, prise perpendiculairement à ses surfaces de contact avec les couches adjacentes, est faible par rapport à la hauteur moyenne des motifs de chacune de ses surfaces de contact avec les couches adjacentes. Une telle épaisseur faible permet d'augmenter la probabilité que l'interface d'entrée d'un rayonnement dans cette couche et l'interface de sortie du rayonnement hors de cette couche soient parallèles, et donc d'augmenter le pourcentage de transmission spéculaire du rayonnement à travers l'élément en couches. De manière avantageuse, l'épaisseur de chaque couche de la couche centrale qui est intercalée entre deux couches de nature, diélectrique ou métallique, différente de la sienne ou d'indices de réfraction différents du sien, où cette épaisseur est prise perpendiculairement à ses surfaces de contact avec les couches adjacentes, est inférieure à 1/4 de la hauteur moyenne des motifs de chacune de ses surfaces de contact avec les couches adjacentes.

La couche centrale est formée soit par une couche unique déposée de manière conforme sur la surface principale texturée de la première couche externe, soit par un empilement de couches, déposées successivement de manière conforme sur la surface principale texturée de la première couche externe.

Selon l'invention, on considère que la couche centrale est déposée de manière conforme sur la surface principale texturée de la première couche externe, si suite au dépôt, la surface supérieure de la couche centrale est texturée et parallèle à la surface de contact texturée de la première couche externe. Le dépôt de la couche centrale de manière conforme, ou des couches de la couche centrale successivement de manière conforme, sur la surface principale texturée de la première couche externe est réalisé de préférence par pulvérisation cathodique, notamment assistée par un champ magnétique.

L'élément en couches transparent peut s'étendre sur toute la surface du vitrage, ou sur au moins une partie du vitrage, c'est-à-dire que l'élément en couches 1 peut être formé ou présent en regard d'une partie seulement ou de la totalité des surfaces principales externes 10 et 20. Le vitrage peut donc comprendre l'élément en couches sur une partie seulement de sa surface. Par conséquent, seule la partie du vitrage comprenant l'élément en couches peut être utilisée efficacement comme écran de projection. La surface du vitrage pouvant servir efficacement d'écran de projection correspond et est alignée à la surface comprenant l'élément en couches. On entend par « une partie de la surface », une surface suffisante pour permettre la projection d'une image visible par un observateur. A titre d'exemple, cette partie de la surface peut représenter 10 à 90% de la surface totale du vitrage.

Pour obtenir, un vitrage homogène en épaisseur malgré l'absence de l'élément en couches, plusieurs solutions sont envisages. Selon un mode de réalisation, on utilise comme couche externe, un substrat transparent comprenant une surface principale externe lisse et une surface principale interne comprenant au moins une partie de sa surface texturée et au moins une partie de sa surface lisse. Une couche centrale est ensuite déposée par exemple par pulvérisation cathodique sur la couche externe. Cette technique de dépôt est conforme à la surface. On obtient par conséquent, une couche centrale texturée uniquement sur les parties texturées de la couche externe et une couche lisse sur les parties non texturées de la couche externe. Enfin, une couche externe à base de matériaux durcissables initialement dans un état visqueux, liquide ou pâteux adapté à des opérations de mise en forme, de préférence une couche sol-gel, est déposée sur la couche centrale. Cette couche vient combler la rugosité lorsque la couche centrale est texturée et planariser dans tous cas la surface principale externe supérieure de cet ensemble.

En procédant ainsi, l'élément en couches de l'invention, présentant notamment pour caractéristique d'avoir au moins deux surfaces de contact entre deux couches adjacentes texturées et parallèles, ne se situe que sur les parties de la surface du vitrage qui correspondent avec les parties texturées de la couche externe. Les parties de la surface du vitrage qui correspondent avec les parties lisses de la couche externe ne présentent pas de surface de contact entre deux couches adjacentes texturées et parallèles et par conséquent, ne présentent pas de propriété de réflexion diffuse. On obtient donc bien ainsi un vitrage comprenant l'élément en couches que sur une partie seulement de la surface du vitrage de l'invention.

La texturation partielle d'un substrat peut être obtenue par tout procédé connu de texturation tel que décrit ci-dessus, par exemple par embossage de la surface du substrat, par abrasion, par sablage, par traitement chimique ou par gravure, en utilisant par exemple des masques pour conserver au moins une partie de la surface du substrat non texturée.

Ce mode de réalisation est avantageux car on peut ainsi, par exemple, obtenir l'élément en couches uniquement sur un bandeau de la partie haute du vitrage pour y projeter des informations. Seule la partie du vitrage comprenant l'élément en couches peut servir efficacement d'écran de projection. Cela est notamment possible grâce au très grand angle de vue qu'offre cette invention, qui permet d'orienter le projecteur avec un angle important.

Selon un mode de réalisation, le vitrage comprend en outre au moins un revêtement antireflet 6. La présence de revêtement antireflet a pour effet de réfléchir de manière privilégiée un rayonnement incident à chaque surface de contact texturée de l'élément en couches plutôt que sur les surfaces externes du vitrage, ce qui correspond à un mode de réflexion diffuse plutôt qu'à un mode de réflexion spéculaire. Une réflexion diffuse du rayonnement par l'élément en couches est ainsi favorisée par rapport à une réflexion spéculaire.

La présence d'un ou plusieurs revêtements antireflets concourt à l'obtention d'une meilleure définition de l'image projetée notamment à l'amélioration de la netteté de l'image et à l'augmentation du contraste de l'image principale issue de la projection par rapport aux images secondaires provenant de réflexions multiples.

Le revêtement antireflet est préférentiellement placé sur la surface principale externe du vitrage située du côté le plus éloigné du projecteur que l'écran soit utilisé en écran de projection ou de rétroprojection. En effet, afin que le vitrage demeure transparent, une majorité de la lumière est transmise à travers, tandis que l'autre partie est réfléchie de manière diffuse pour former cette image. Cette majeure partie de la lumière transmise peut alors être réfléchie par la surface principale externe du vitrage située du côté opposé au projecteur et reformer une image sur la couche centrale qui aura alors une taille différente du fait de la plus longue distance parcourue par la lumière. Cette double image détériore la netteté de l'image.

Le même phénomène se produit sur l'autre surface principale externe du vitrage située du côté projecteur, mais uniquement à partir de la fraction de la lumière réfléchie de manière diffuse et donc une image moins intense.

Le vitrage comprend avantageusement au moins un revêtement antireflet sur chacune de ses surfaces principales externes.

Par ordre de préférence croissant, le vitrage de l'invention comporte donc :

- au moins un revêtement antireflet à l'interface entre l'air et le matériau constitutif de la couche formant la surface principale externe du vitrage, de préférence sur le côté du vitrage opposé par rapport au projecteur,
- au moins un revêtement antireflet sur chacune des surfaces principales externes du vitrage.

Lorsque le vitrage comprend un substrat (ou contre-substrat) dont la surface externe correspond à la surface principale externe du vitrage, le revêtement antireflet peut se trouver sur la surface externe et/ou sur la surface interne du substrat.

Le revêtement antireflet prévu sur au moins l'une des surfaces principales externes du vitrage peut être de tout type permettant de réduire la réflexion de rayonnement à l'interface entre l'air et le support sur lequel il est déposé tel qu'un substrat de verre ou la couche externe de l'élément en couches. Il peut s'agir, notamment, d'une couche d'indice de réfraction compris entre l'indice de réfraction de l'air et l'indice de réfraction du support sur lequel elle est déposée, telle qu'une couche déposée par une technique sous vide ou une couche poreuse de type sol-gel, ou encore, dans le cas où la couche externe est en verre, une partie superficielle creusée de la couche externe en verre obtenue par un traitement à l'acide de type « etching ». En variante, le revêtement antireflet peut être formé par un empilement de couches minces ayant des indices de réfraction alternativement plus faibles et plus forts jouant le rôle d'un filtre interférentiel à l'interface entre l'air et la couche externe, ou par un empilement de couches minces présentant un gradient, continu ou échelonné, d'indices de réfraction entre l'indice de réfraction de l'air et celui de la couche externe.

Les couches additionnelles sont de préférence choisies parmi :

- les substrats transparents choisis parmi les polymères, les verres ou les céramiques tels que définis ci-dessus mais comprenant deux surfaces principales lisses,
- matériaux durcissables initialement dans un état visqueux, liquide ou pâteux adapté à des opérations de mise en forme tels que décrits ci-dessus,
- les intercalaires ou feuilles en matière plastique thermoformable ou sensible à la pression tels que décrits ci-dessus.

De manière avantageuse, les surfaces principales externes lisses de l'élément en couches et/ou les surfaces principales externes lisses du vitrage sont planes ou bombées, de préférence, ces surfaces principales externes lisses sont parallèles entre elles. Cela contribue à limiter la dispersion lumineuse pour un rayonnement traversant l'élément en couches, et donc à améliorer la netteté de la vision à travers l'élément en couches ou le vitrage.

L'invention a également pour objet un système de projection comprenant un vitrage utilisé comme écran de projection tel que défini dans la présente demande et un projecteur prévu pour éclairer le vitrage en projection.

L'invention a également pour objet le vitrage utilisé comme écran de projection ou de rétroprojection selon l'invention comprenant deux surfaces principales externes 10, 20 présentant les caractéristiques décrites dans la présente demande se rapportant au vitrage.

Le vitrage est de préférence utilisé comme un écran de projection fonctionnant en réflexion, c'est à dire que les spectateurs et le projecteur sont situés du même côté du vitrage utilisé comme écran de projection. Le vitrage peut toutefois être utilisé comme un écran de rétroprojection fonctionnant en transmission, c'est à dire que les spectateurs et le projecteur sont situés de chaque côté du vitrage.

Ledit vitrage comporte de préférence au moins un élément en couches 1 transparent tel que défini ci-dessus, et au moins un système à diffusion variable.

Selon l'invention, le vitrage comprend en outre un système à diffusion lumineuse variable électrocommandable. Le film fonctionnel comprend des éléments actifs dont l'orientation est modifiée par application d'un champ électrique ou magnétique.

Ces systèmes à diffusion lumineuse variable comprennent, par exemple, les systèmes à cristaux liquides.

Selon l'invention, on entend par « état ON » l'état transparent du film fonctionnel lorsque le vitrage est alimenté en électricité et par « état OFF » l'état diffusant du film fonctionnel quand le vitrage n'est plus alimenté en électricité. Les éléments actifs, quand le film est mis sous tension, s'orientent selon un axe privilégié, ce qui permet à un rayonnement d'être transmis et donc autorise la vision à travers le film fonctionnel. Hors tension, en l'absence d'alignement des éléments actifs, le film devient diffusant et empêche la vision. Le film fonctionnel alterne de manière réversible entre un état transparent et un état translucide par application d'un champ électrique.

L'association d'un élément en couches transparent à propriétés de réflexion diffuse et d'un système à diffusion lumineuse variable permet de commuter entre un état transparent et un état diffusant. La combinaison des propriétés en réflexion du système à diffusion lumineuse variable à l'état diffusant et de l'élément transparent à réflexion diffuse permet d'obtenir un écran de projection présentant une excellente luminosité, un contraste élevé et un angle de vue supérieur par rapport à un vitrage comprenant un système à diffusion lumineuse variable utilisé seul.

Enfin, lorsque le système à diffusion lumineuse variable est à l'état transparent, de par la présence de l'élément en couches transparent à réflexion diffuse, le vitrage peut tout de même servir d'écran de projection en projection directe.

Selon l'invention, il est possible de projeter des images de bonnes qualités dans des environnements éclairés alors que cela était difficile pour les vitrages de l'art antérieur comprenant des systèmes à diffusion lumineuse variable. La qualité des images projetées est très fortement améliorée, notamment le contraste, sans nuire à la transparence du vitrage lorsque le film fonctionnel est à l'état ON.

Ce mode de réalisation avantageux permet donc par rapport à un vitrage comprenant uniquement un système à diffusion lumineuse variable d'augmenter la luminosité et le contraste aussi bien dans la pénombre que dans une pièce éclairée et d'obtenir d'excellents angles de vue et par conséquent une bonne vision et lisibilité de l'image même en l'observant avec un angle de 180°.

Les systèmes à diffusion lumineuse variable électrocommandables à cristaux liquides comprennent un film fonctionnel contenant des cristaux liquides. Ces systèmes à cristaux liquides alternent de manière réversible par application d'un champ électrique, de préférence alternatif, entre un état transparent et un état non transparent. Le film fonctionnel comprend de préférence une matière polymérique dans laquelle sont dispersées des gouttelettes de cristaux liquides, notamment nématiques à anisotropie diélectrique positive.

Les cristaux liquides utilisés pour des applications vitrage font de préférence partie de la famille des cristaux liquides calamitiques. Cette famille de cristaux liquides est généralement divisée en trois groupes, nématiques, cholestériques et smectiques.

Pour des applications en grande surface, on parle généralement de cristaux liquides dispersés (PDLC, Polymer-Dispersed Liquid Cristal) et des cristaux liquides encapsulés (NCAP, Nematic Curvilinear Aligned Phase) notamment ceux utilisés dans les vitrages Priva-Lite®. Ces systèmes sont issus de cristaux liquides nématiques enfermés dans des microcavités. Les films NCAP sont préparés en général à partir d'une émulsion, tandis que les films PDLC sont en général issus d'une solution isotrope qui forme des phases séparées pendant la polymérisation ou réticulation.

On peut également utiliser selon l'invention des cristaux liquides de type CLC (« Cholesteric Liquid Cristal ») ou NPD-LCD (« Non-homogenous Polymer Dispersed Liquid Crystal Display »).

On peut également utiliser, par exemple, une couche comprenant un gel à base de cristaux liquides cholestériques contenant une faible quantité de polymère réticulé, comme ceux décrits dans le brevet WO-92/19695 ou des cristaux liquides qui commutent avec variation de transmission lumineuse TL. Plus largement, on peut donc choisir des PSCT (« Polymer Stabilized Cholesteric Texture »).

On peut également utiliser des cristaux liquides bistables tels que décrits dans le brevet EP 2 256 545 qui commutent sous l'application d'un champ électrique alternatif sous forme impulsionnelle et qui reste dans l'état commuté jusqu'à l'application d'une nouvelle impulsion.

Le film fonctionnel comprenant les cristaux liquides a de préférence une épaisseur comprise entre 3 et 100 μm, de préférence 3 à 50 μm et mieux 3 à 30 μm.

Le film fonctionnel peut comprendre un film polymère dans lequel sont dispersés des cristaux liquides comme éléments actifs ou une couche de cristaux liquides. Le film polymère peut être un film polymère réticulé ou une émulsion de cristaux liquides dans un médium. Les cristaux liquides connus sous les termes de NCAP, PDLC, CLC, NPD-LCD peuvent être utilisés.

Le film fonctionnel peut être un film polymère qui comprend comme éléments actifs des cristaux liquides dispersés sous forme de gouttelettes dans un médium approprié. Les cristaux liquides peuvent être nématiques à anisotropie diélectrique positive tels que les cristaux liquides du type NCAP ou PDLC. Des exemples de film fonctionnel à cristaux liquides sont décrits notamment dans les brevets européen EP-88 126, EP-268 877, EP-238 164, EP-357 234, EP-409 442 et EP-964 288 et les brevets américains US 4,435,047, US 4,806,922 et US 4,732,456.

Ces films polymères peuvent être obtenus par évaporation de l'eau contenue dans une émulsion aqueuse de cristaux liquides et d'un médium comprenant un polymère soluble dans l'eau.

Le médium est de préférence à base d'un polymère de la famille des latex de type polyuréthane (PU) et/ou d'un polymère de type alcool polyvinylique (PVA), généralement préparé en phase aqueuse dans une proportion de polymères de 15 à 50% en poids par rapport à l'eau.

En règle générale, la biréfringence des cristaux liquides est comprise entre 0,1 et 0,2 et varie notamment en fonction du médium utilisé. Leur biréfringence est de l'ordre de 0,1 si le polymère du médium est de type polyuréthane (PU) et de l'ordre de 0,2 s'il est de type alcool polyvinylique (PVA).

Les éléments actifs vis-à-vis de la diffusion lumineuse sont avantageusement sous forme de gouttelettes de diamètre moyen compris entre 0,5 et 3 μm, notamment entre 1 et 2,5 μm, dispersées dans le médium. La taille des gouttelettes dépend d'un certain nombre de paramètres, dont notamment la facilité d'émulsion des éléments actifs dans le médium considéré. De préférence, ces gouttelettes représentent entre 120 et 220% en poids du médium, notamment entre 150 et 200% en poids, hormis le solvant, généralement aqueux dudit médium.

De manière particulièrement préférée, on choisit des cristaux liquides sous forme de gouttelettes d'un diamètre d'environ 2,5 μm quand le médium est à base de latex de polyuréthane (biréfringence d'environ 0,1) et d'un diamètre d'environ 1 μm quand le médium est plutôt à base de polyvinylalcool (biréfringence d'environ 0,2).

Un film fonctionnel comportant une émulsion liquide de cristaux liquides nématiques comprend de préférence une épaisseur d'environ 10 à 30 μm, mieux de 20 à 25 μm.

Ce type de film, une fois feuilleté et incorporé entre deux substrats, est commercialisé par la société SAINT-GOBAIN GLASS sous la dénomination commerciale Privalite®.

Un film polymère comprenant des cristaux liquides peut être obtenu par préparation d'un mélange comprenant des cristaux liquides, des monomères et de préférence un initiateur de polymérisation suivie de la réticulation des monomères.

Le film polymère comprenant les cristaux liquides peut comprendre des composés tels que le composé 4-((4-Éthyle-2,6-difluorophényl)-éthinyl)-4'-propylbiphényl et 2-Fluor-4,4'-bis(trans-4-propylcyclohexyl)-biphenyl par exemple vendu par la société Merck sous la référence MDA-00-3506.

Le film polymère peut comprendre les composés connus décrits dans le document US 5,691,795. A titre de cristaux liquides convenant selon l'invention, on peut citer le produit de Merck Co., Ltd, commercialisé sous le nom commercial « E-31 LV » qui correspond à un mélange de plusieurs composés cristaux liquides. De manière préférée, on utilise un mélange de ce produit avec une substance chirale, par exemple le 4-cyano-4'-(2-méthyl)butylbiphényle, un monomère par exemple le 4,4'-bisacryloylbiphényle et un photoinitiateur UV, par exemple l'éther méthylique de benzoïne (CAS N° 3524-62-7). Ce mélange est appliqué sous forme de « couche » au contact de l'électrode. Après durcissement du film polymère comprenant les cristaux liquides par irradiation à la lumière UV, il se forme un réseau polymère dans lequel les cristaux liquides sont incorporés.

Un film polymère comprenant un réseau polymère dans lequel les cristaux liquides sont incorporés peut avoir une épaisseur allant de 3 à 100 $\mu$m, de préférence 3 à 60 $\mu$m, et mieux 3 à 20 $\mu$m.

Selon un autre mode de réalisation, la couche de cristaux liquides comprend des cristaux liquides et des espaceurs. Les espaceurs peuvent être en verre tels que des billes de verre ou en matière plastique dure par exemple en polyméthacrylate de méthyle (PMMA). Ces espaceurs sont de préférence transparents et de préférence présentent un indice optique sensiblement égal à l'indice optique de la matrice de la couche de cristaux liquides. Les espaceurs sont en matériau non-conducteur.

La couche de cristaux liquides ne contient pas nécessairement de polymère constituant un médium ou un réseau. Cette couche peut être uniquement constituée des cristaux liquides et des espaceurs. Les cristaux liquides sont appliqués (sans monomère additionnel) sur une épaisseur de 3 à 60 $\mu$m, de préférence 3 et 20 $\mu$m au contact de l'électrode. Des composés convenant pour ce mode de réalisation sont décrits par exemple dans le document US 3,963,324. Selon ce mode de réalisation, l'épaisseur de la couche de cristaux liquides peut être comprise entre 10 et 30 $\mu$m, de préférence 10 à 20 $\mu$m.

Le système à diffusion lumineuse variable comprenant le film fonctionnel peut s'étendre sur toute la surface du vitrage ou sur au moins une partie du vitrage. Lorsque le système à diffusion lumineuse variable s'étend sur au moins une partie du vitrage, cette partie de la surface correspond et est alignée avec la partie de la surface du vitrage comprenant l'élément en couches. Le système à diffusion lumineuse variable peut donc être formé ou présent en regard d'une partie seulement ou de la totalité des surfaces principales externes 10, 20 du vitrage.

Le film fonctionnel est de préférence encadré par deux supports porteurs d'électrodes, les électrodes étant en contact direct avec le film fonctionnel.

Les électrodes comprennent chacune au moins une couche électroconductrice. La couche électroconductrice peut comprendre des oxydes conducteurs transparents (TCO), c'est-à-dire des matériaux qui sont à la fois bon conducteurs et transparents dans le visible, tels que l'oxyde d'indium dopé à l'étain (ITO), l'oxyde d'étain dopé à l'antimoine ou au fluor (SnOz : F) ou l'oxyde de zinc dopé à l'aluminium (ZnO: Al). Une couche électroconductrice à base d'ITO présente une résistance d'environ 100 ohms par carré.

La couche électroconductrice peut également comprendre des polymères conducteurs transparents qui sont des composés organiques à doubles liaisons conjuguées dont la conductivité peut être améliorée par dopage chimique ou électrochimique.

Ces couches électroconductrices à base d'oxydes conducteurs ou de polymères conducteurs sont de préférence déposées sur des épaisseurs de l'ordre de 50 à 100 nm, directement sur le film fonctionnel ou sur une couche intermédiaire, par un grand nombre de techniques connues telles que la pulvérisation cathodique assistée par un champ magnétique, l'évaporation, la technique sol-gel, ainsi que des techniques de dépôt en phase vapeur (CVD).

La couche électroconductrice peut également être une couche métallique, de préférence une couche mince ou un empilement de couches minces, dites TCC (pour « Transparent conductive coating » en anglais) par exemple en Ag, Al, Pd, Cu, Pd, Pt In, Mo, Au et typiquement d'épaisseur entre 2 et 50 nm.

Les électrodes comprenant une couche électriquement conductrice sont connectées à une alimentation en énergie. L'alimentation en énergie peut être une alimentation électrique utilisant des tensions comprises entre 0 et 110 V. Deux câbles électriques comportant chacun une entrée de câblage sont liés à une connectique d'électrode distincte.

Les couches électroconductrices des électrodes peuvent alors être déposées directement sur une face d'un support et ainsi former les supports porteurs d'électrode.

Les supports peuvent être des feuilles de verre, par exemple des feuilles de verre plat flotté ou des intercalaires en matière plastique. Les feuilles en matière plastique peuvent notamment être des feuilles en polymère thermoplastique du type PVB (polyvinylbutyral) ou EVA (éthylène vinyle acétate), polyuréthane (PU) ou des feuilles en polyéthylène téréphtalate (PET).

Les feuilles de PET ont par exemple une épaisseur comprise entre 50 $\mu$m et 1 mm, de préférence comprise entre 100 et 500 $\mu$m, mieux comprise entre 150 et 200$\mu$m, notamment d'environ 175 $\mu$m.

Le système à diffusion lumineuse variable peut donc comprendre deux supports porteurs d'électrode constitués chacun d'une feuille de PET recouverte d'une couche électroconductrice d'ITO, encadrant un film fonctionnel.

Un système à diffusion lumineuse variable de ce type est utilisé dans les vitrages Priva-Lite® de SAINT GOBAIN GLASS.

De préférence, on utilise une feuille de verre présentant une épaisseur d'au moins 3 mm lorsque l'épaisseur du film fonctionnel est inférieure à 30 $\mu$m et une feuille de verre présentant une épaisseur d'au moins 2 mm lorsque l'épaisseur du film fonctionnel est supérieure ou égale à 30 $\mu$m.

Le système à diffusion lumineuse variable peut donc comprendre deux supports porteurs d'électrode comprenant une feuille de verre plan flotté comprenant une électrode comprenant une couche électroconductrice, encadrant un film fonctionnel.

L'élément en couches peut être un vitrage rigide ou un film flexible. Un tel film flexible est avantageusement muni, sur l'une de ses surfaces principales externes, d'une couche d'adhésif recouverte d'une bande de protection destinée à être retirée pour le collage du film. L'élément en couches sous forme de film flexible est alors apte à être rapporté par collage sur une surface existante, par exemple une surface d'un vitrage, afin de conférer à cette surface des propriétés de réflexion diffuse, tout en maintenant des propriétés de transmission spéculaire.

Dans un mode de réalisation préféré de l'invention, la couche externe inférieure est un substrat transparent. La couche centrale est formée soit par une couche unique déposée de manière conforme sur la surface principale texturée de la première couche externe, soit par un empilement de couches, déposées successivement de manière conforme sur la surface principale texturée de la première couche externe. De préférence, la couche centrale est déposée par pulvérisation cathodique, notamment assistée par un champ magnétique. La deuxième couche externe ou couche externe supérieure comprend une couche de sol-gel, déposée sur la surface principale texturée de la couche centrale opposée à la première couche externe.

Selon un autre aspect de l'invention, une ou plusieurs couches additionnelles supérieures peuvent être utilisées telles qu'un intercalaire ou feuille en matière plastique thermoformable ou sensible à la pression et/ou un substrat transparent ou contre-substrat. La couche à base d'un intercalaire ou feuille en matière plastique correspond alors à un intercalaire de feuilletage assurant la liaison ou solidarisation entre la couche externe supérieure de l'élément en couche comprenant de préférence la couche sol-gel et la couche additionnelle comprenant de préférence le contre-substrat.

Le vitrage de l'invention comprend de préférence :

- éventuellement au moins une couche additionnelle inférieure choisie parmi les substrats transparents dont les deux surfaces principales sont lisses tels que les polymères et les verres et les intercalaires en matière plastique thermoformable ou sensible à la pression,
- une couche externe inférieure choisie parmi les substrats transparents tels que les polymères et les verres, les intercalaires en matière plastique thermoformable ou sensible à la pression et les matériaux durcissables initialement dans un état visqueux, liquide ou pâteux adapté à des opérations de mise en forme,
- une couche centrale comprenant une couche mince constituée d'un matériau transparent, de préférence diélectrique, ou une couche mince métallique,
- une couche externe supérieure choisie parmi les couches sol-gel,
- éventuellement au moins une couche additionnelle supérieure choisie parmi les substrats transparents dont les deux surfaces principales sont lisses choisis parmi les polymères et les verres et les intercalaires en matière plastique thermoformable ou sensible à la pression.

Dans une variante de l'invention, le vitrage de l'invention comprend :

- un élément en couches comprenant :

  - une couche externe inférieure choisie parmi les substrats transparents en verre rugueux,
  - une couche centrale comprenant de préférence une couche mince,
  - une couche externe supérieure choisie parmi les matériaux durcissables initialement dans un état visqueux, liquide ou pâteux adapté à des opérations de mise en forme, de préférence une couche sol-gel,

- un intercalaire en matière plastique thermoformable ou sensible à la pression,
- un substrat transparent en verre plat comprenant de préférence au moins un revêtement antireflet.

Dans ce mode de réalisation, le vitrage comprend une couche additionnelle supérieure choisie parmi les intercalaires de matière thermoformables ou sensibles à la pression, sur laquelle se superpose préférentiellement une autre couche additionnelle supérieure choisie parmi les substrats transparents en verre.

Dans une autre variante de l'invention, le vitrage de l'invention comprend :

- un élément en couches,
- un intercalaire en matière plastique thermoformable ou sensible à la pression,
- un système à diffusion lumineuse variable comprenant un film fonctionnel encadré par deux supports porteurs d'électrodes, lesdites électrodes étant directement au contact du film fonctionnel,
- un intercalaire en matière plastique thermoformable ou sensible à la pression,
- un substrat transparent en verre plat comprenant de préférence au moins un revêtement antireflet.

Le procédé de fabrication d'un vitrage comprenant l'élément en couches tel que décrit précédemment et un système à diffusion lumineuse variable, peut comprendre les étapes suivantes :

A) on fabrique l'élément en couches :

- on fournit, en tant que première couche externe ou couche externe inférieure, un substrat transparent dont l'une des surfaces principales est texturée et l'autre surface principale est lisse ;
- on dépose une couche centrale sur la surface principale texturée de la couche externe inférieure, soit, lorsque la couche centrale est formée par une couche unique, qui est une couche transparente, de préférence diélectrique, d'indice de réfraction différent de celui de la couche externe inférieure ou une couche métallique, en déposant la couche centrale de manière conforme sur ladite surface principale texturée, soit, lorsque la couche centrale est formée par un empilement de couches comprenant au moins une couche transparente, de préférence diélectrique, d'indice de réfraction différent de celui de la couche externe inférieure ou une couche métallique, en déposant les couches de la couche centrale successivement de manière conforme sur ladite surface principale texturée ;
- on forme la deuxième couche externe ou couche externe supérieure sur la surface principale texturée de la couche centrale opposée à la couche externe inférieure, où les couches externes inférieure et supérieure sont constituées de matériaux transparents, de préférence diélectriques, ayant sensiblement le même indice de réfraction,
- éventuellement on forme au moins une couche additionnelle supérieure et/ou inférieure sur la ou les surfaces principales externes lisses de l'élément en couches,

B) on assemble l'élément en couches comprenant éventuellement des couches additionnelles et un système à diffusion lumineuse variable.

Le système à diffusion lumineuse variable et l'élément en couches peuvent être assemblés par tous moyens connus tels que des moyens mécanique ou chimique. On peut notamment les assembler par feuilletage grâce à l'utilisation d'intercalaire de feuilletage.

De préférence, le dépôt de la couche centrale de manière conforme, ou des couches de la couche centrale successivement de manière conforme, sur la surface principale texturée de la première couche externe est réalisé par pulvérisation cathodique, notamment assistée par un champ magnétique.

Selon un aspect de l'invention, la deuxième couche externe est formée en déposant, sur la surface principale texturée de la couche centrale opposée à la première couche externe, une couche qui a sensiblement le même indice de réfraction que la première couche externe et qui se présente initialement dans un état visqueux adapté à des opérations de mise en forme. La deuxième couche externe peut ainsi être formée, par exemple, par un procédé comprenant le dépôt d'une couche de matériau photoréticulable et/ou photopolymérisable initialement sous forme fluide puis l'irradiation de cette couche, ou par un procédé sol-gel.

Selon un autre aspect de l'invention, la deuxième couche externe est formée en positionnant, contre la surface principale texturée de la couche centrale opposée à la première couche externe, une couche à base de matériau polymère ayant sensiblement le même indice de réfraction que la première couche externe, puis en conformant cette couche à base de matériau polymère contre la surface principale texturée de la couche centrale par compression et/ou chauffage au moins à la température de transition vitreuse du matériau polymère.

Les caractéristiques et avantages de l'invention apparaîtront dans la description qui va suivre de plusieurs modes de réalisation d'un élément en couches, donnés uniquement à titre d'exemple et faits en se référant aux dessins annexés dans lesquels:

- la figure 1 est une coupe transversale schématique d'un système de projection selon l'invention comprenant un projecteur et un vitrage comprenant l'élément en couches conforme à un mode de réalisation selon l'invention ;
- la figure 2 est une vue à plus grande échelle du détail I de la figure 1 pour une première variante de l'élément en couches ;
- la figure 3 est une vue à plus grande échelle du détail I de la figure 1 pour une deuxième variante de l'élément en couches ; et
- les figures 4 et 5 sont deux coupes transversales schématiques de systèmes de projection selon l'invention comprenant un projecteur et un vitrage comprenant l'élément en couches et un système à diffusion lumineuse variable conforme à des modes de réalisation préférentiels selon l'invention ;
- les figures 6 et 7 représentent des schémas montrant les étapes d'un procédé de fabrication d'un vitrage selon l'invention,
- les figures 8 et 9 représentent des photographies.

Pour la clarté du dessin, les épaisseurs relatives des différentes couches sur les figures n'ont pas été rigoureusement respectées. De plus, la possible variation d'épaisseur de la ou chaque couche constitutive de la couche centrale en fonction de la pente de la texture n'a pas été représentée sur les figures, étant entendu que cette possible variation d'épaisseur n'impacte pas le parallélisme des surfaces de contact texturées. En effet, pour chaque pente donnée de la texture, les surfaces de contact texturées sont parallèles entre elles.

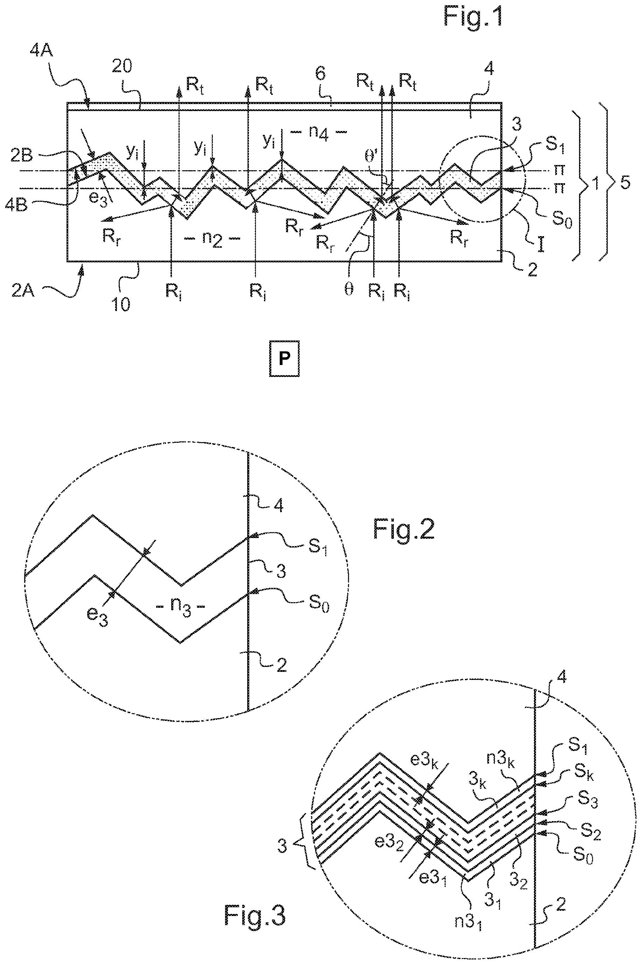

La figure 1 représente un système de projection destiné à fonctionner en réflexion comprenant un projecteur P et un vitrage 5 comprenant un élément en couches 1. Le vitrage est utilisé comme écran de projection, i.e. pour un spectateur situé du côté du projecteur P, plutôt que comme écran de rétroprojection, i.e. dans lequel le projecteur est situé derrière le vitrage, le spectateur et le projecteur étant séparés par le vitrage.

Le vitrage comprend deux surfaces principales externes 10 et 20. La surface principale externe 10 représente le côté du vitrage sur lequel on projette grâce au projecteur des images visibles par des spectateurs. La surface principale externe 20 représente le côté du vitrage opposé par rapport au projecteur. Le vitrage étant utilisé comme un écran de projection fonctionnant en réflexion, les spectateurs et le projecteur sont situés du même côté du vitrage.

L'élément en couches 1 comprend deux couches externes 2 et 4, qui sont constituées de matériaux transparents ayant sensiblement le même indice de réfraction n2, n4. Chaque couche externe 2 ou 4 présente une surface principale lisse, respectivement 2A ou 4A, dirigée vers l'extérieur de l'élément en couches, et une surface principale texturée, respectivement 2B ou 4B, dirigée vers l'intérieur de l'élément en couches.

Les surfaces externes lisses 2A et 4A de l'élément en couches 1 permettent une transmission spéculaire de rayonnement à chaque surface 2A et 4A, c'est-à-dire l'entrée d'un rayonnement dans une couche externe ou la sortie d'un rayonnement depuis une couche externe sans modification de la direction du rayonnement.

Les textures des surfaces internes 2B et 4B sont complémentaires l'une de l'autre. Comme bien visible sur la figure 1, les surfaces texturées 2B et 4B sont positionnées en regard l'une de l'autre, dans une configuration où leurs textures sont strictement parallèles entre elles. L'élément en couches 1 comprend également une couche centrale 3, intercalée en contact entre les surfaces texturées 2B et 4B.

Dans la variante montrée sur la figure 2, la couche centrale 3 est monocouche et constituée d'un matériau transparent qui est soit métallique, soit transparent d'indice de réfraction n3 différent de celui des couches externes 2 et 4. Dans la variante montrée sur la figure 3, la couche centrale 3 est formée par un empilement transparent de plusieurs couches $3_1$, $3_2$,..., $3_k$, où au moins l'une des couches $3_1$ à $3_k$ est soit une couche métallique, soit une couche transparente, de préférence diélectrique, d'indice de réfraction différent de celui des couches externes 2 et 4. De préférence, au moins chacune des deux couches 3, et $3_k$ situées aux extrémités de l'empilement est une couche métallique ou une couche transparente d'indice de réfraction n3, ou $n3_k$ différents de celui des couches externes 2 et 4.

Sur les figures 1 à 3, on note $S_0$ la surface de contact entre la couche externe 2 et la couche centrale 3, et $S_1$ la surface de contact entre la couche centrale 3 et la couche externe 4. De plus, sur la figure 3, on note successivement $S_2$ à $S_k$ les surfaces de contact internes de la couche centrale 3, en partant de la surface de contact la plus proche de la surface $S_0$.

Dans la variante de la figure 2, du fait de l'agencement de la couche centrale 3 en contact entre les surfaces texturées 2B et 4B qui sont parallèles entre elles, la surface de contact $S_0$ entre la couche externe 2 et la couche centrale 3 est texturée et parallèle à la surface de contact $S_1$ entre la couche centrale 3 et la couche externe 4. En d'autres termes, la couche centrale 3 est une couche texturée présentant sur toute son étendue une épaisseur e3 uniforme, prise perpendiculairement aux surfaces de contact $S_0$ et $S_1$.

Dans la variante de la figure 3, chaque surface de contact $S_2$,..., $S_k$ entre deux couches adjacentes de l'empilement constitutif de la couche centrale 3 est texturée et strictement parallèle aux surfaces de contact $S_0$ et $S_1$ entre les couches externes 2, 4 et la couche centrale 3. Ainsi, toutes les surfaces de contact $S_0$, $S_1$,..., $S_k$ entre des couches adjacentes de l'élément 1 qui sont soit de natures différentes, transparentes d'indice de réfraction (n2, n4, n3, $n3_1$, $n3_2$, ... ou $n3_k$) ou métalliques, soit transparentes d'indices de réfraction différents, sont texturées et parallèles entre elles. En particulier, chaque couche $3_1$, $3_2$,..., $3_k$ de l'empilement constitutif de la couche centrale 3 présente, au moins localement, une épaisseur $e3_1$, $e3_2$,..., $e3_k$ uniforme, prise perpendiculairement aux surfaces de contact $S_0$, $S_1$,..., $S_k$.

Comme montré sur la figure 1, la texture de chaque surface de contact $S_0$, $S_1$ ou $S_0$, $S_1$,..., $S_k$ de l'élément en couches 1 est formée par une pluralité de motifs en creux ou en saillie par rapport à un plan général $\pi$ de la surface de contact. De préférence, la hauteur moyenne des motifs de chaque surface de contact texturée $S_0$, $S_1$ ou $S_0$, $S_1$,..., $S_k$ est comprise entre 1 micromètre et 1 millimètre. La hauteur moyenne des motifs de chaque surface de contact texturée est définie comme la moyenne arithmétique $\frac{1}{n}\sum_{i=1}^{n}|y_i|$ , avec $y_i$ la distance prise entre le sommet et le plan $\pi$ pour chaque motif de la surface, comme montré schématiquement sur la figure 1.

Selon un aspect de l'invention, l'épaisseur e3 ou $e3_1$, $e3_2$,..., $e3_k$ de la ou chaque couche constitutive de la couche centrale 3 est inférieure à la hauteur moyenne des motifs de chaque surface de contact texturée $S_0$, $S_1$ ou $S_0$, $S_1$,..., $S_k$ de l'élément en couches 1. Cette condition est importante pour augmenter la probabilité que l'interface d'entrée d'un rayonnement dans une couche de la couche centrale 3 et l'interface de sortie du rayonnement hors de cette couche soient parallèles, et ainsi augmenter le pourcentage de transmission spéculaire du rayonnement à travers l'élément en couches 1. Dans un souci de visibilité des différentes couches, cette condition n'a pas été strictement respectée sur les figures.

De préférence, l'épaisseur e3 ou $e3_1$, $e3_2$,..., $e3_k$ de la ou chaque couche constitutive de la couche centrale 3 est inférieure à 1/4 de la hauteur moyenne des motifs de chaque surface de contact texturée de l'élément en couches. En pratique, lorsque la couche centrale 3 est une couche mince ou un empilement de couches minces, l'épaisseur e3 ou $e3_1$, $e3_2$,..., $e3_k$ de chaque couche de la couche centrale 3 est de l'ordre de, ou inférieure à, 1/10 de la hauteur moyenne des motifs de chaque surface de contact texturée de l'élément en couches.

La figure 1 illustre le parcours d'un rayonnement, qui est incident sur l'élément en couches 1 du côté de la couche externe 2. Les rayons incidents $R_i$ arrivent sur la couche externe 2 avec un angle d'incidence $\theta$ donné. Comme montré sur la figure 1, les rayons incidents $R_i$, lorsqu'ils atteignent la surface de contact $S_0$ entre la couche externe 2 et la couche centrale 3, sont réfléchis soit par la surface métallique, soit du fait de la différence d'indice de réfraction à cette surface de contact respectivement entre la couche externe 2 et la couche centrale 3 dans la variante de la figure 2 et entre la couche externe 2 et la couche 3, dans la variante de la figure 3. Comme la surface de contact $S_0$ est texturée, la réflexion s'opère dans une pluralité de directions $R_r$. La réflexion du rayonnement par l'élément en couches 1 est donc diffuse.

Une partie du rayonnement incident est également réfractée dans la couche centrale 3. Dans la variante de la figure 2, les surfaces de contact $S_0$ et $S_1$ sont parallèles entre elles, ce qui implique d'après la loi de Snell-Descartes que $n2.\sin(\theta) = n4.\sin(\theta')$, où $\theta$ est l'angle d'incidence du rayonnement sur la couche centrale 3 à partir de la couche externe 2 et $\theta'$ est l'angle de réfraction du rayonnement dans la couche externe 4 à partir de la couche centrale 3. Dans la variante de la figure 3, comme les surfaces de contact $S_0$, $S_1$,..., $S_k$ sont toutes parallèles entre elles, la relation $n2.\sin(\theta) = n4.\sin(\theta')$ issue de la loi de Snell-Descartes reste vérifiée. Dès lors, dans les deux variantes, comme les indices de réfraction n2 et n4 des deux couches externes sont sensiblement égaux l'un à l'autre, les rayons $R_t$ transmis par l'élément en couches sont transmis avec un angle de transmission $\theta'$ égal à leur angle d'incidence $\theta$ sur l'élément en couches. La transmission du rayonnement par l'élément en couches 1 est donc spéculaire.

De manière analogue, dans les deux variantes, un rayonnement incident sur l'élément couches 1 du côté de la couche externe 4 est réfléchi de manière diffuse et transmis de manière spéculaire par l'élément en couches, pour les mêmes raisons que précédemment.

De manière avantageuse, l'élément en couches 1 comprend un revêtement antireflet 6 sur au moins l'une de ses surfaces principales externes lisses du vitrage 10 et 20. Le vitrage de la figure 1 ne comprend pas de couche additionnelle. Par conséquent, les surfaces principales externes du vitrage 10 et 20 sont confondues avec les surfaces principales externes de l'élément en couches 2A et 4A. De préférence, un revêtement antireflet 6 est prévu sur chaque surface principale externe du vitrage qui est destinée à recevoir un rayonnement. Dans l'exemple de la figure 1, seule la surface 20 du vitrage est munie d'un revêtement antireflet 6, car il s'agit de la surface du vitrage qui est dirigée du côté opposé au projecteur.

Comme évoqué précédemment, le revêtement antireflet 6, peut-être de tout type permettant de réduire la réflexion de rayonnement à l'interface entre l'air et la couche externe. Il peut s'agir notamment d'une couche d'indice de réfraction compris entre l'indice de réfraction de l'air et l'indice de réfraction de la couche externe, d'un empilement de couches minces jouant le rôle d'un filtre interférentiel, ou encore d'un empilement de couches minces présentant un gradient d'indices de réfraction.

Dans cet exemple, la couche centrale déposée par magnétron sur le verre satiné assure la réflexion diffuse qui permet la projection directe d'une image, tandis que la couche de planarisation sol-gel permet de maintenir la transparence du vitrage en transmission. L'ajout du contre-verre avec traitement antireflet permet de diminuer les réflexions multiples à l'intérieur du vitrage et ainsi d'améliorer la qualité des images projetées.

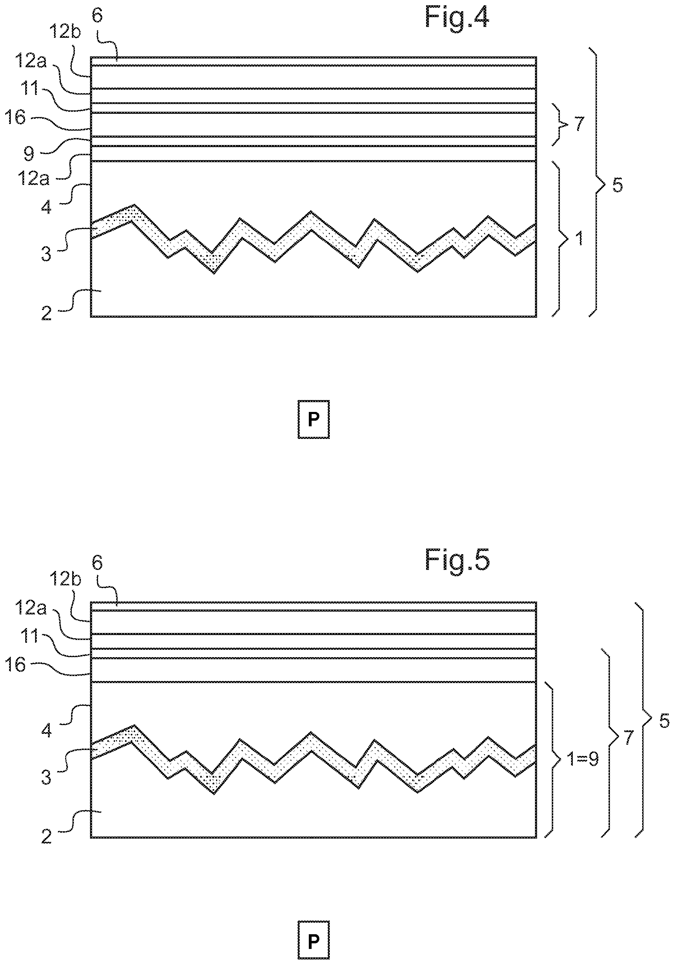

Les figures 4 et 5 illustrent deux autres systèmes de projection selon l'invention dont le vitrage 5 incorpore un système à diffusion lumineuse variable électrocommandable 7 pouvant commuter entre un état transparent et un état diffusant. A l'état « OFF », on obtient un vitrage comprenant une surface principale externe diffusante permettant une projection directe améliorée car la réflexion diffuse sur la couche magnétron s'ajoute à la réflexion diffuse sur le film à cristaux liquides. A l'état « ON », on obtient un vitrage comprenant une surface principale externe transparente dont le fonctionnement est le même que sans système à diffusion lumineuse variable.

Le vitrage illustré sur la figure 4 comprend l'empilement suivant :

- un élément en couches comprenant :

  - une couche externe inférieure 2 comprenant un substrat en verre rugueux
  - une couche centrale 3 comprenant une couche mince à base d'argent ou d'acier inoxydable
  - une couche externe supérieure 4 composée d'une couche sol-gel,

- une couche additionnelle 12a constituée d'un intercalaire en matière plastique thermoformable ou sensible à la pression,
- un système à diffusion lumineuse variable 7 comprenant un film fonctionnel 16 encadré par deux supports porteurs d'électrodes, un support porteur d'électrode inférieur 9 et un support porteur d'électrode supérieur 11, lesdites électrodes étant directement au contact du film fonctionnel 16,
- un couche additionnelle supérieure 12a constituée d'un intercalaire en matière plastique thermoformable ou sensible à la pression,
- un autre couche additionnelle supérieure 12b constituée d'un substrat transparent en verre plat comprenant un revêtement antireflet 6.

Les supports porteurs des électrodes sont des feuilles en matière plastique constituée de polyéthylène téréphtalate sur lesquels les électrodes ont été déposées. L'électrode peut être une couche électriquement conductrice d'une épaisseur d'environ 20 à 400 nm, réalisée en oxyde d'indium et d'étain (ITO) par exemple. Les couches d'ITO ont une résistance électrique de surface comprise entre 5 $\Omega$/carré et 300 $\Omega$/carré. Au lieu des couches réalisées en ITO, on peut également utiliser dans le même but d'autres couches d'oxyde électriquement conducteur ou des couches d'argent dont la résistance de surface est comparable. Enfin, le film fonctionnel 16 est constitué d'une couche de cristaux liquides

Enfin, le vitrage illustré sur la figure 5 représente le mode de réalisation selon lequel l'élément en couches assure la fonction de support porteur d'électrode. Le vitrage illustré sur la figure 5 comprend l'empilement suivant :

- un élément en couches 1 comprenant :

  - une couche externe inférieure 2 comprenant un substrat en verre rugueux
  - une couche centrale 3 comprenant une couche mince, de préférence métallique,
  - une couche externe supérieure 4 composée d'oxyde de zinc et d'étain présentant une résistivité inférieure à 1 ohm.cm,

- un film fonctionnel 16,
- un support porteur d'électrode supérieur 11,
- un couche additionnelle supérieure 12a constituée d'un intercalaire en matière plastique thermoformable ou sensible à la pression,
- un autre couche additionnelle supérieure 12 b constituée d'un substrat transparent en verre plat comprenant un revêtement antireflet 6.

La couche externe inférieure 2 de l'élément en couches assure la fonction de support de l'ensemble constitué de la couche centrale et de la couche externe supérieure, ensemble assurant quant à lui la fonction d'électrode. L'élément en couches 1 constitue donc un support porteur d'électrode inférieur.

Le système à diffusion lumineuse variable 7 comprend un film fonctionnel 16 encadré par deux supports porteurs d'électrodes, un support porteur d'électrode inférieur 9 constitué de l'élément en couches 1 et un support porteur d'électrode supérieur 11, lesdites électrodes étant directement au contact du film fonctionnel,

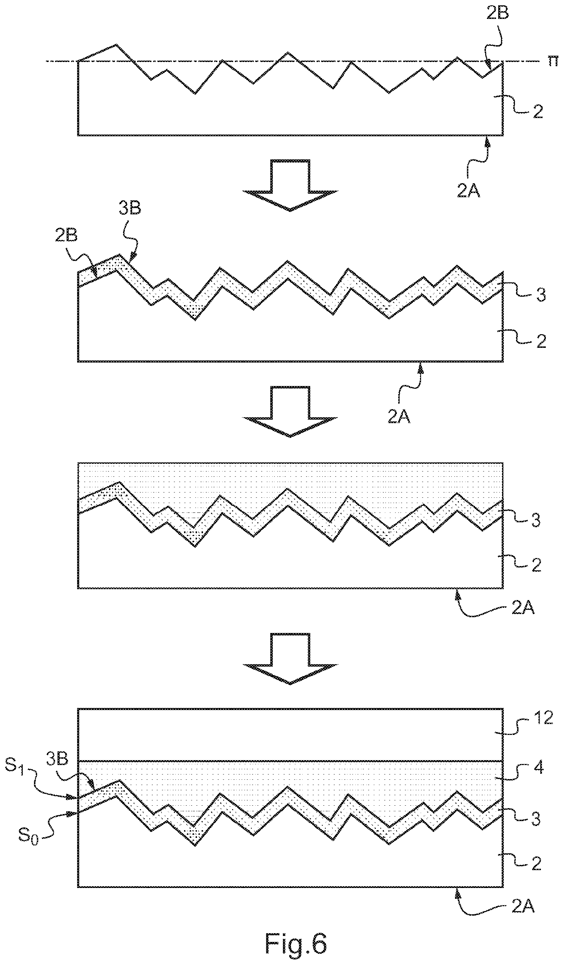

Un exemple de procédé de fabrication du vitrage de l'invention est décrit ci-après en référence à la figure 6. Selon ce procédé, la couche centrale 3 est déposée de manière conforme sur une surface texturée 2B d'un substrat transparent, rigide ou flexible, formant la couche externe 2 de l'élément en couches 1. La surface principale 2A de ce substrat opposée à la surface texturée 2B est lisse. Ce substrat 2 peut être, notamment, un substrat en verre texturé de type SATINOVO®, ALBARINO® ou MASTERGLASS®. En variante, le substrat 2 peut être un substrat à base de matériau polymère, rigide ou flexible, par exemple de type polyméthacrylate de méthyle ou polycarbonate.

Le dépôt conforme de la couche centrale 3, qu'elle soit monocouche ou formée par un empilement de plusieurs couches, est notamment réalisé, de préférence, sous vide, par pulvérisation cathodique assistée par champ magnétique (pulvérisation dite « cathodique magnétron »). Cette technique permet de déposer, sur la surface texturée 2B du substrat 2, soit la couche unique de manière conforme, soit les différentes couches de l'empilement successivement de manière conforme. Il peut s'agir en particulier de couches minces transparentes, de préférence diélectriques, notamment des couches de $Si_3N_4$, $SnO_2$, $ZnO$, $ZrO_2$, $SnZnO_x$, AlN, NbO, NbN, $TiO_2$, $SiO_2$, $Al_2O_3$, $MgF_2$, $AlF_3$, ou de couches minces métalliques, notamment des couches d'argent, d'or, de titane, de niobium, de silicium, d'aluminium, d'alliage nickel-chrome (NiCr), ou d'alliages de ces métaux.

Dans le procédé de la figure 6, la deuxième couche externe 4 de l'élément en couches 1 peut être formée en recouvrant la couche centrale 3 avec une couche sol-gel transparente d'indice de réfraction sensiblement égal à celui du substrat 2, qui se présente initialement dans un état visqueux adapté à des opérations de mise en forme et qui est durcissable. Cette couche vient, à l'état visqueux, liquide ou pâteux, épouser la texture de la surface 3B de la couche centrale 3 opposée au substrat 2. Ainsi, on garantit que, à l'état durci de la couche 4, la surface de contact $S_1$ entre la couche centrale 3 et la couche externe 4 est bien texturée et parallèle à la surface de contact $S_0$ entre la couche centrale 3 et la couche externe 2.

La couche externe 4 de l'élément en couches 1 de la figure 6 est une couche sol-gel, déposé par un procédé sol-gel sur la surface texturée de la couche centrale 3.

Enfin, une ou plusieurs couches additionnelles 12 peuvent être formées au-dessus de l'élément en couches. Dans ce cas, la ou les couches additionnelles sont de préférence un substrat en verre plat, un intercalaire en matière plastique ou une superposition d'un intercalaire et d'un substrat de verre plat.

Lorsque la couche externe de l'élément en couches a été obtenue à partir d'une couche sol-gel, il peut exister sur la surface externe principale lisse de cette couche certaines irrégularités. Afin de compenser ces irrégularités, il peut être intéressant de former sur cette couche sol-gel, une couche additionnelle 12 en positionnant un intercalaire de feuilletage en PVB ou EVA, contre la surface externe principale lisse de l'élément en couches. La couche additionnelle 12 a dans ce cas sensiblement le même indice de réfraction que la couche externe de l'élément en couches obtenue à partir d'un procédé sol-gel.

La couche additionnelle peut également être un substrat transparent par exemple un verre plat. Dans ce cas, la couche additionnelle est utilisée comme un contre-substrat. La couche sol-gel assure alors une solidarisation entre la couche externe inférieure munie de la couche centrale et le contre-substrat.

L'utilisation d'un substrat transparent comme couche additionnelle supérieure est particulièrement utile lorsque la couche additionnelle directement en-dessous de ladite couche additionnelle supérieure est formée par un intercalaire de feuilletage polymère.

Une première couche additionnelle 12 formée par un intercalaire de feuilletage en PVB ou EVA peut être positionnée contre la surface supérieure externe de l'élément en couches et une seconde couche additionnelle 12 constituée d'un substrat en verre plat peuvent venir surmonter l'intercalaire.

Dans cette configuration, les couches additionnelles sont associées à l'élément en couches, par un procédé classique de feuilletage. Dans ce procédé, on positionne successivement, à partir de la surface principale externe supérieure de l'élément en couches, l'intercalaire de feuilletage polymère et le substrat, puis on applique à la structure feuilletée ainsi formée une compression et/ou un chauffage, au moins à la température de transition vitreuse de l'intercalaire de feuilletage polymère, par exemple dans une presse ou une étuve.

Au cours de ce procédé de feuilletage, lorsque l'intercalaire forme la couche supérieure additionnelle située directement au-dessus de l'élément en couche dont la couche supérieure est une couche sol-gel, il se conforme à la fois à la surface supérieure de la couche sol-gel et à la surface inférieure du substrat en verre plat.

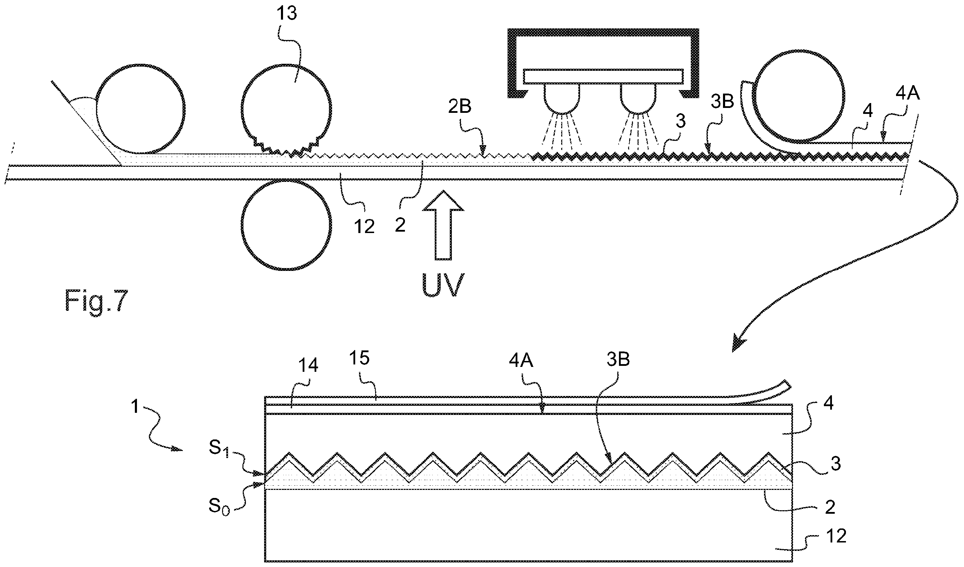

Dans le procédé illustré sur la figure 7, l'élément en couches 1 est un film flexible d'épaisseur totale de l'ordre de 200-300 $\mu$m. L'élément en couches est formé par la superposition :

- d'une couche additionnelle inférieure 12 formée par un film flexible polymérique,
- d'une couche externe 2 en matériau photoréticulable et/ou photopolymérisable sous l'action d'un rayonnement UV, appliquée contre l'une des surfaces principales lisses du film flexible,
- d'une couche centrale 3,
- d'une couche sol-gel ayant une épaisseur d'environ 15 $\mu$m de manière à former la deuxième couche externe 4 de l'élément en couches 1.

Le film flexible formant la couche additionnelle inférieure peut être un film de polyéthylène téréphtalate (PET) ayant une épaisseur de 100 $\mu$m et la couche externe 2 peut être une couche de résine durcissable aux UV de type KZ6661 commercialisée par la société JSR Corporation ayant une épaisseur d'environ 10 $\mu$m. Le film flexible et la couche 2 ont tous les deux sensiblement le même indice de réfraction, de l'ordre de 1,65 à 550 nm. A l'état durci, la couche de résine présente une bonne adhésion avec le PET.

La couche de résine 2 est appliquée sur le film flexible avec une viscosité permettant la mise en place d'une texturation sur sa surface 2B opposée au film 12. Comme illustré sur la figure 7, la texturation de la surface 2B peut être réalisée à l'aide d'un rouleau 13 ayant à sa surface une texturation complémentaire de celle à former sur la couche 2. Une fois la texturation formée, le film flexible et la couche de résine 2 superposés sont irradiés avec un rayonnement UV, comme montré par la flèche de la figure 7, ce qui permet la solidification de la couche de résine 2 avec sa texturation et l'assemblage entre le film flexible et la couche de résine 2.

La couche centrale 3 d'indice de réfraction différent de celui de la couche externe 2 est ensuite déposée de manière conforme sur la surface texturée 2B, par pulvérisation cathodique magnétron. Cette couche centrale peut être monocouche ou formée par un empilement de couches, comme décrit précédemment. Il peut s'agir par exemple d'une couche de $TiO_2$ ayant une épaisseur comprise entre 55 et 65 nm, soit de l'ordre de 60 nm et un indice de réfraction de 2,45 à 550 nm.

La couche sol-gel est ensuite déposée sur la couche centrale 3 de manière à former la deuxième couche externe 4 de l'élément en couches 1. Cette deuxième couche externe 4 se conforme à la surface texturée 3B de la couche centrale 3 opposée à la couche externe 2.

Une couche d'adhésif 14, recouverte d'une bande de protection (liner) 15 destinée à être retirée pour le collage, peut être rapportée sur la surface externe 4A de la couche 4 de l'élément en couches 1. L'élément en couches 1 se présente ainsi sous la forme d'un film flexible prêt à être rapporté par collage sur une surface, telle qu'une surface d'un vitrage, afin de conférer à cette surface des propriétés de réflexion diffuse. Dans l'exemple de la figure 7, la couche d'adhésif 14 et la bande de protection 15 sont rapportées sur la surface externe 4A de la couche 4. La surface externe 2A de la couche 2, qui est destinée à recevoir un rayonnement incident, est quant à elle munie d'un revêtement antireflet.

De manière particulièrement avantageuse, comme suggéré sur la figure 7, les différentes étapes du procédé peuvent être effectuées en continu sur une même ligne de fabrication.

La mise en place du ou des revêtements antireflet de l'élément en couches 1 n'a pas été représentée sur les figures 6 à 7. Il est à noter que, dans chacun des procédés illustrés sur ces figures, le ou les revêtements antireflet peuvent être mis en place sur les surfaces lisses 2A et/ou 4A des couches externes avant ou après l'assemblage de l'élément en couches, de manière indifférente.

L'invention n'est pas limitée aux exemples décrits et représentés. En particulier, lorsque l'élément en couches est un film flexible comme dans l'exemple de la figure 7, l'épaisseur de chaque couche externe formée à base d'un film polymère, par exemple à base d'un film de PET, peut être supérieure à 10 $\mu$m, notamment de l'ordre de 10 $\mu$m à 1 mm.

De plus, la texturation de la première couche externe 2 dans l'exemple de la figure 7 peut être obtenue sans recourir à une couche de résine durcissable déposée sur le film polymère, mais directement par embossage à chaud d'un film polymère, notamment par laminage à l'aide d'un rouleau texturé ou par pressage à l'aide d'un poinçon.

Des architectures analogues peuvent également être envisagées pour des substrats plastiques à la place des substrats en verre.

L'utilisation du vitrage ainsi défini comme écran de projection fonctionnant en réflexion permet d'améliorer le contraste et/ou la luminosité et/ou l'angle de vue.

Le vitrage selon l'invention peut être utilisé notamment comme cloison interne (entre deux pièces ou dans un espace) dans un bâtiment. Plus particulièrement, le vitrage de l'invention est particulièrement utile en tant que cloison interne de salle de réunion pour projeter des présentations. On peut commuter entre l'état transparent et l'état diffus.

Le vitrage selon l'invention est susceptible d'être utilisé pour toutes applications connues de vitrages, telles que pour véhicules, bâtiments, mobilier urbain, ameublement intérieur, éclairage, écrans d'affichage, etc. Le vitrage transparent de l'invention peut donc être utilisé en façade, en fenêtre, en cloison intérieure utilisable en écran de projection pour des salles de réunion ou des vitrines. Le vitrage peut également être utilisé pour de la muséographie ou de la publicité sur lieu de vente comme support publicitaire.

Il peut s'agir également d'un film flexible à base de matériau polymère, notamment apte à être rapporté sur une surface afin de lui conférer des propriétés de réflexion diffuse tout en préservant ses propriétés de transmission.

Le vitrage à forte réflexion diffuse de l'invention peut être utilisé dans un système de visualisation dit tête haute, ou « Head Up Display » (HUD). De manière connue, les systèmes HUD, qui sont utiles notamment dans les cockpits d'avion, les trains, mais aussi aujourd'hui dans les véhicules automobiles des particuliers (voitures, camions, etc.), permettent d'afficher des informations projetées sur un vitrage, en général le pare-brise du véhicule, qui se réfléchissent vers le conducteur ou l'observateur. Ces systèmes permettent d'informer le conducteur du véhicule sans que celui-ci éloigne son regard du champ de vision en avant du véhicule, ce qui permet d'accroître grandement la sécurité.

Selon un aspect de l'invention, l'élément en couches est intégré dans un système HUD en tant que vitrage, sur lequel sont projetées les informations. Selon un autre aspect de l'invention, l'élément en couches est un film flexible rapporté sur une surface principale d'un vitrage d'un système HUD, notamment un pare-brise, les informations étant projetées sur le vitrage du côté du film flexible. Dans ces deux cas, il s'opère une forte réflexion diffuse sur la première surface de contact texturée rencontrée par le rayonnement dans l'élément en couches, ce qui permet une bonne visualisation de l'image virtuelle, tandis que la transmission spéculaire à travers le vitrage est préservée, ce qui garantit une vision nette à travers le vitrage.

On note que, dans les systèmes HUD de l'état de la technique, l'image virtuelle est obtenue en projetant les informations sur un vitrage (notamment un pare-brise) ayant une structure feuilletée formée de deux feuilles de verre et d'un intercalaire en matière plastique. Un inconvénient de ces systèmes existants est que le conducteur observe alors une image double : une première image réfléchie par la surface du vitrage orientée vers l'intérieur de l'habitable et une seconde image par réflexion de la surface extérieure du vitrage, ces deux images étant légèrement décalées l'une par rapport à l'autre. Ce décalage peut perturber la vision de l'information.

L'invention permet de remédier à ce problème. En effet, lorsque l'élément en couches est intégré dans un système HUD, en tant que vitrage ou en tant que film flexible rapporté sur la surface principale du vitrage qui reçoit le rayonnement de la source de projection, la réflexion diffuse sur la première surface de contact texturée rencontrée par le rayonnement dans l'élément en couches peut être nettement plus élevée que la réflexion sur les surfaces externes en contact avec l'air. Ainsi, on limite la double réflexion en favorisant la réflexion sur la première surface de contact texturée de l'élément en couches.

**Exemples**

**I. matériaux utilisés**

**1. Elément en couches**

Ces essais ont été réalisés avec un élément en couche comprenant l'empilement suivant :

- Couche externe inférieure : substrat de verre Satinovo®,
- Couche centrale : couche à base d'argent ou d'acier inoxydable déposée par magnétron,
- Couche externe supérieure : couche sol-gel.

Les substrats utilisés comme couche externe inférieure de l'élément en couches sont des substrats satinés de verre rugueux transparents SATINOVO® commercialisés par la société Saint-Gobain. Ces substrats de 6 mm d'épaisseur comprennent une surface principale texturée obtenue par attaque acide. Ces substrats sont donc utilisés comme couche externe inférieure de l'élément en couches. La hauteur moyenne des motifs de la texturation de cette couche externe inférieure, qui correspond à la rugosité Ra de la surface texturée du verre Satinovo®, est comprise entre 1 et 5 $\mu$m. Son indice de réfraction est de 1,518 et son PV (« pic to valley ») est compris entre 12 et 17 $\mu$m.

La couche centrale est une couche ou un empilement de couche déposée par dépôt magnétron de manière conforme sur la surface texturée du substrat Satinovo® correspondant à :

- un empilement comprenant une couche à base d'argent référencée KN 169 chez Saint-Gobain présentant lorsqu'elle est déposée sur un substrat de verre plat de 6 mm d'épaisseur une transmission lumineuse TL de 69%,
- empilement comprenant une couche à base d'acier inoxydable référencée SS 132 chez Saint-Gobain présentant lorsqu'elle est déposée sur un substrat de verre plat de 6 mm d'épaisseur une transmission lumineuse TL de 32%.

La couche sol-gel comprend une matrice à base de silice dans laquelle sont dispersées des particules d'oxyde métallique. Elle présente un indice de réfraction de 1,51 et une épaisseur d'environ 15 $\mu$m.

**2. Système à diffusion variable (SDLV)**

Le système à diffusion variable (SDLV1) comprend comme supports porteurs d'électrodes deux feuilles de polyéthylène téréphtalate recouvertes d'une couche d'ITO et encadrant le film fonctionnel, c'est à dire le milieu comprenant les gouttelettes de cristaux liquides. Ce système à diffusion variable est actuellement utilisé dans les vitrages PrivaLite® de SAINT-GOBAIN GLASS. Le film fonctionnel comportant l'émulsion liquide de cristaux liquides nématiques est d'une épaisseur d'environ 10 à 30 $\mu$m (de préférence 20 à 25 $\mu$m). Les feuilles de PET ont une épaisseur d'environ 175 $\mu$m. Les deux électrodes sont constituées d'ITO (oxyde d'indium dopé à l'étain) de résistance environ 100 ohms par carré.

**3. Autres substrats**

D'autres substrats (ou contre-verre) peuvent être utilisés pour former le vitrage de l'invention. Ces substrats peuvent être feuilletés en utilisant par exemple un intercalaire en PVB ou en EVA. A titre de substrat, on peut citer les verres plats tels qu'un verre Planilux® ou diamant®.

Il est également possible d'utiliser des verres plats comprenant un ou plusieurs revêtements antireflets obtenus par dépôt par pulvérisation cathodique sous vide de couches d'oxyde métalliques. L'effet antireflet est obtenu par le dépôt d'une couche sur chaque face extérieure du verre. De tels verres sont par exemple commercialisés sous la dénomination Visionlite® par la société Saint-Gobain.

## II. Influence de la nature de la couche centrale

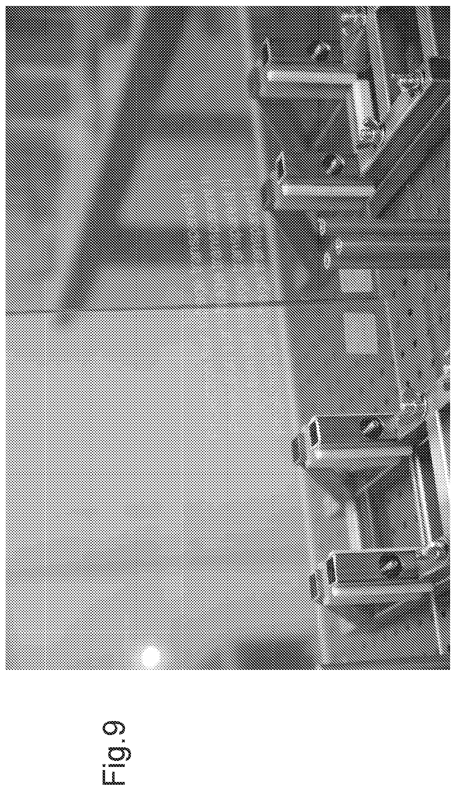

Cet essai compare deux vitrages selon l'invention différant uniquement de par la nature de la couche centrale. Afin de comparer les vitrages utilisés comme écran de projection de l'invention, un panel de plusieurs personnes a apprécié visuellement la luminosité et la transparence des vitrages lorsqu'une image est projetée en projection directe. L'image projetée évaluée par le panel a fait l'objet de la photographie Z sur la figure 9. Les images ont été projetées sur le côté du vitrage ne comprenant pas la couche antireflet. Le panel a attribué pour chaque image projetée sur un vitrage un indicateur d'appréciation choisi parmi : «--» mauvais, «-» moyen, «0» correcte, «+» bon, «++» excellent.

| Empilement | Ex. 1 | Ex. 2 |
|---|---|---|
| Elément transparent à réflexion diffuse :<br>- Substrat en verre Satinovo®<br>- couche magnétron<br>- couche sol-gel | KN169 | SS132 |
| Intercalaire (PVB) | Oui | Oui |
| Substrat en verre Visionlite® | Oui | Oui |
| **Photographie Z** | Image de droite | Image de gauche |
| luminosité | + | ++ |
| transparence | ++ | + |
| contraste | + | ++ |

La photographie Z illustre respectivement une projection sur un vitrage à réflexion diffuse pourvu d'une couche KN169 à gauche et d'une couche SS132 à droite. Le vitrage de l'exemple 1 est plus transparent mais la luminosité de l'image projetée est moins élevée. A contrario, le vitrage de l'exemple 2 est moins transparent mais la luminosité de l'image projetée est plus élevée. Pour ces deux exemples, le contraste et l'angle de vue sont bons.

Cet exemple illustre que le choix de la couche centrale et plus particulièrement le choix de ses propriétés de réflexion doit être adapté en fonction de l'application et du rendu désirés. Pour une ambiance lumineuse dans la pièce de projection, un compromis entre transparence du vitrage et luminosité de l'image projetée peut être obtenu en faisant varier les propriétés de la couche centrale.

## III. Vitrages comprenant un élément transparent à propriété diffuse

Les exemples de l'invention ont été réalisés en feuilletant grâce à des intercalaires de feuilletage l'empilement suivant : élément transparent à propriété de réflexion diffuse coté (couche sol gel) / système à diffusion lumineuse variable / verre Vision-lite®.

L'exemple comparatif a été réalisé en feuilletant grâce à des intercalaires de feuilletage l'empilement suivant : substrat de verre plat / système à diffusion lumineuse variable / verre Vision-lite®.

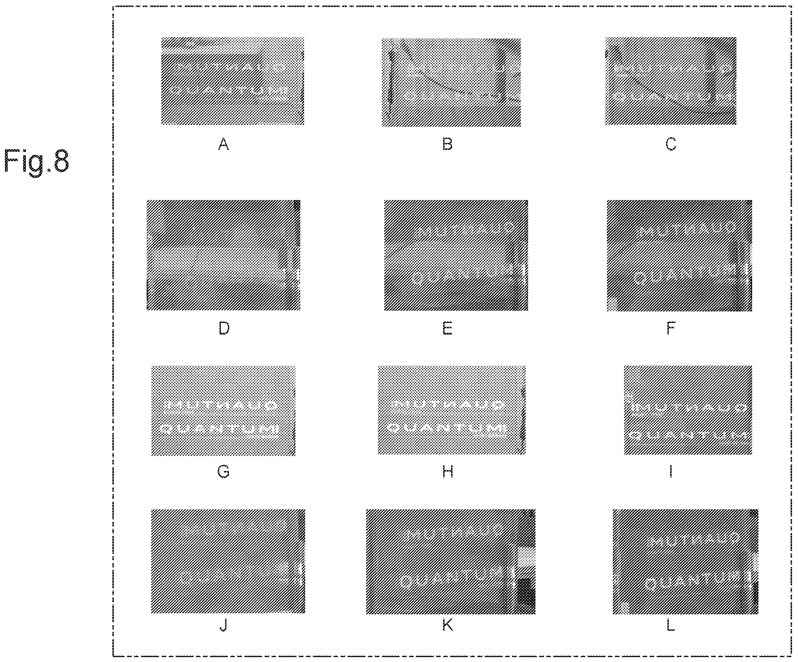

Afin de montrer la qualité supérieure des vitrages utilisés comme écran de projection de l'invention, un panel de plusieurs personnes a apprécié visuellement la luminosité et le contraste des vitrages lorsqu'une image est projetée en projection directe, c'est-à-dire avec les observateurs et le projecteur situés du même côté du vitrage. Chaque image projetée évaluée par le panel a fait l'objet d'une photographie. Ces photographies ont été regroupées sur la figure 8. Les images ont été projetées sur le côté du vitrage ne comprenant pas la couche antireflet.

| Empilement | Exemple Comparatif | Ex. 3 | Ex. 4 |
|---|---|---|---|
| Substrat en verre | Oui | Non | Non |

(suite)

| Empilement | Exemple Comparatif | Ex. 3 | Ex. 4 |
|---|---|---|---|
| Elément transparent à réflexion diffuse :<br>- Substrat en verre Satinovo®<br>- couche magnétron<br>- couche sol-gel | Non | Oui<br>KN169 | Oui<br>SS 132 |
| Intercalaire (EVA) | Oui | Oui | Oui |
| SDLV | 1 | 1 | 1 |
| Intercalaire (EVA) | Oui | Oui | Oui |
| Substrat en verre Visionlite® | Oui | Oui | Oui |

Le panel a attribué pour chaque image projetée sur un vitrage un indicateur d'appréciation choisi parmi : «--» mauvais, «-» moyen, «0» correcte, «+» bon, «++» excellent. Le tableau ci-dessous récapitule les vitrages, condition d'évaluation et appréciation du panel ainsi que la référence de la photographie correspondante.

| Photographies | Vitrage | Angle de vue | Etat | Qualité de l'écran | |
|---|---|---|---|---|---|
| | | | | luminosité | Contraste |
| A | Ex. comp. | face | ON | + | + |
| B | Ex. 3 | face | ON | + | + |
| C | Ex. 4 | face | ON | ++ | ++ |
| D | Ex. comp. | 45° | ON | - | - |
| E | Ex. 3 | 45° | ON | + | + |
| F | Ex. 4 | 45° | ON | ++ | ++ |
| G | Ex. comp. | face | OFF | ++ | ++ |
| H | Ex. 3 | face | OFF | ++ | ++ |
| I | Ex. 4 | face | OFF | + | + |
| J | Ex. comp. | 45° | OFF | - | - |
| K | Ex. 3 | 45° | OFF | + | + |
| L | Ex. 4 | 45° | OFF | ++ | ++ |

Les photographies A, B, C, D, E et F ont été réalisées avec le système à diffusion lumineuse variable à l'état ON, c'est-à-dire transparent. On constate qu'à l'état transparent un vitrage comprenant uniquement un système à diffusion lumineuse variable est inutilisable avec des angles de vue de 45° (photographies D). La luminosité de l'écran décroit fortement lorsque l'angle d'observation augmente. En comparaison, un vitrage comprenant en outre au moins le système à diffusion lumineuse variable et dans le cas des exemples une couche antireflet permet une nette amélioration de la qualité de l'image pour des angles de vue de l'ordre de 45° (photographies E et F).

Les photographies G, H, I, J, K et L ont été réalisées avec le système à diffusion lumineuse variable à l'état OFF, c'est-à-dire diffusant. On observe de face une amélioration de la luminosité (photographies G, H et I). En revanche, à l'état diffusant un vitrage comprenant uniquement un système à diffusion lumineuse variable est de médiocre qualité pour des angles de vue de 45° (photographie J). L'angle de vue de tels écrans en projection même à l'état diffusant est très réduit les rendant inutilisables. En comparaison, un vitrage comprenant en outre au moins le système à diffusion lumineuse variable et dans le cas des exemples une couche antireflet permet une nette amélioration de la qualité de l'image pour des angles de vue élevés (photographies K et L). Par conséquent, l'angle de vue pour la projection directe est amélioré sur le vitrage de l'invention du fait d'une réflexion diffuse isotrope de la couche magnétron sur verre Satinovo®.

Enfin, les exemples 3 et 4 différent essentiellement par le choix de la couche centrale. La même tendance concernant la luminosité et le contraste est observée que pour les exemples 1 et 2 qui présentent respectivement les mêmes couches centrales (KN 169 et SS132).

## IV. Analyse du contraste

Des mesures du contraste ont été réalisées dans des conditions spécifiques d'éclairement afin de tester les écrans de projection de l'invention. Lorsque la pièce de projection n'est pas éclairée (ambiance « OFF »), l'éclairement moyen est de 1 lux et lorsque la pièce de projection est allumé (ambiance « ON »), l'éclairement moyen est de 195 lux.

La mesure de luminance est effectuée à la surface du vitrage avec un luminancemètre Konica-Minolta® LS-110. La projection d'image est réalisée avec un vidéoprojecteur Canon® XEED SX80 (Luminosité, 3000 lumens, contraste 900:1).

La disposition des éléments est la suivante. Le vidéoprojecteur est situé à 1,5 m de l'écran. Les observateurs et l'appareil photographique sont situés à 2 m de l'écran.

Cet essai permet de mesurer le contraste du vitrage comme écran de projection. Le contraste est défini comme le rapport de la luminance mesurée quand le projecteur affiche une image blanche (Lb) sur la luminance mesurée quand le projecteur affiche une image sombre (Ln).

Le tableau ci-dessous donne les mesures de luminance effectuées sur les écrans à l'état diffusant (vitrage OFF) ou transparent (vitrage ON).

La mesure du contraste sur un vitrage parfaitement transparent vaut 1.

| Vitrage | Angle de vue | Ambiance | Vitrage | Luminanc e du Blanc | Luminanc e du Noir | Contrast e | amélioratio n contraste % |
|---|---|---|---|---|---|---|---|
| Ex. comp. | Face | ON | ON | 460 | 41 | 11,2 | |
| Ex. 3 | Face | ON | ON | 296 | 31,2 | 9,5 | -15 % |
| Ex. comp. | Face | ON | OFF | 732 | 36,5 | 20,1 | |
| Ex. 3 | Face | ON | OFF | 615 | 27,9 | 22,0 | 9% |
| Ex. comp. | Face | OFF | ON | 401 | 1,15 | 348,7 | |
| Ex. 3 | Face | OFF | ON | 266 | 0,56 | 475,0 | 36 % |
| Ex. Comp. | Face | OFF | OFF | 708 | 1,8 | 393,3 | |
| Ex. 3 | Face | OFF | OFF | 599 | 1,1 | 544,5 | 38 % |
| Ex. comp. | 45° | ON | ON | 39,8 | 23,7 | 1,7 | |
| Ex. 3 | 45° | ON | ON | 57,3 | 16,9 | 3,4 | 100 % |
| Ex. comp. | 45° | ON | OFF | 81,7 | 18 | 4,5 | |
| Ex. 3 | 45° | ON | OFF | 79,4 | 12,3 | 6,5 | 44 % |
| Ex. Comp. | 45° | OFF | ON | 15,9 | 0,15 | 106,0 | |
| Ex. 3 | 45° | OFF | ON | 40 | 0,12 | 333,3 | 214% |
| Ex. comp. | 45° | OFF | OFF | 65,4 | 0,2 | 327,0 | |
| Ex. 3 | 45° | OFF | OFF | 67 | 0,15 | 446,7 | 36% |

Ces essais confirment qu'à l'état transparent un vitrage comprenant uniquement un système à diffusion lumineuse variable est inutilisable avec des angles de vue de 45°. La présence de l'élément en couches permet une augmentation du contraste supérieure à 35% dans tous les cas pour un angle de vue de 45°.

A l'état diffusant un vitrage comprenant uniquement un système à diffusion lumineuse variable est de médiocre qualité pour des angles de vue de 45° (contraste de 1,7). En comparaison, un vitrage de l'invention permet une nette amélioration de la qualité de l'image pour des angles de vue élevés. L'amélioration du contraste est notamment de 100% lorsque la pièce est éclairée et de 214% lorsque la pièce est éteinte.

**Revendications**

1. Procédé de projection ou de rétroprojection selon lequel on dispose d'un vitrage (5) comprenant deux surfaces principales externes (10, 20) utilisé comme écran de projection ou de rétroprojection et d'un projecteur, ledit procédé consistant à projeter grâce au projecteur des images visibles par des spectateurs sur l'un des côtés du vitrage dans lequel ledit vitrage comprend

   un élément en couches (1) transparent ayant deux surfaces principales externes (2A, 4A) lisses, **caractérisé en ce que** l'élément en couche (1) comprend :

   - deux couches externes (2, 4), qui forment chacune une des deux surfaces principales externes (2A, 4A) de l'élément en couches et qui sont constituées de matériaux transparents, de préférence diélectriques, ayant sensiblement le même indice de réfraction (n2, n4), et
   - une couche centrale (3) intercalée entre les couches externes, cette couche centrale (3) étant formée soit par une couche unique qui est une couche transparente diélectrique d'indice de réfraction (n3) différent de celui des couches externes ou une couche métallique, soit par un empilement de couches ($3_1$, $3_2$, ... , $3_k$) qui comprend au moins une couche transparente diélectrique, d'indice de réfraction ($n3_1$, $n3_2$, ...ou $n3_k$) différent de celui des couches externes ou une couche métallique,

   où chaque surface de contact ($S_0$, $S_1$, ..., $S_k$) entre deux couches adjacentes de l'élément en couches qui sont l'une transparente d'indice de réfraction (n2, n4, n3, $n3_1$, $n3_2$, ... ou $n3_k$) et l'autre métallique, ou qui sont deux couches transparentes d'indices de réfraction différents, est texturée et parallèle aux autres surfaces de contact texturées entre deux couches adjacentes qui sont l'une transparente d'indice de réfraction (n2, n4, n3, $n3_1$, $n3_2$, ... ou $n3_k$) l'autre métallique ou qui sont deux couches transparentes d'indices de réfraction différents, et **caractérisé en ce que** ledit vitrage comprend en outre
   au moins un système à diffusion lumineuse variable comprenant un film fonctionnel susceptible de commuter entre un état transparent et un état diffusant,
   le système à diffusion lumineuse variable comprenant le film fonctionnel s'étendant sur toute la surface du vitrage ou sur au moins une partie du vitrage, lorsque le système à diffusion lumineuse variable s'étend sur au moins une partie du vitrage, cette partie de la surface correspond et est alignée avec la partie de la surface du vitrage comprenant l'élément en couches.

2. Procédé de projection ou de rétroprojection selon la revendication 1 **caractérisé en ce que** le vitrage comprend en outre au moins un revêtement antireflet.

3. Procédé de projection ou de rétroprojection selon la revendication 2 **caractérisé en ce que** le vitrage comprend au moins un revêtement antireflet à l'interface entre l'air et le matériau constitutif de la couche formant la surface principale externe du vitrage sur le côté du vitrage opposé par rapport au projecteur.

4. Procédé de projection ou de rétroprojection selon l'une quelconque des revendications précédentes **caractérisé en ce que** le système à diffusion lumineuse variable est électrocommandable et comprend un film fonctionnel encadré par deux supports porteurs d'électrodes, lesdites électrodes étant directement au contact du film fonctionnel.

5. Procédé de projection ou de rétroprojection selon la revendication précédente **caractérisé en ce que** l'élément en couches transparent constitue l'un des supports porteurs d'électrode du système à diffusion lumineuse variable, la couche externe inférieure assure la fonction de support et l'ensemble constitué de la couche centrale et de la couche externe supérieure assure la fonction d'électrode.

6. Procédé de projection ou de rétroprojection selon l'une quelconque des revendications précédentes **caractérisé en ce que** le système à diffusion lumineuse variable est formé en regard d'une partie seulement des surfaces principales externes (10, 20) du vitrage.

7. Procédé de projection ou de rétroprojection selon l'une quelconque des revendications précédentes **caractérisé en ce que** l'élément en couches est formé en regard d'une partie seulement des surfaces principales externes (10, 20) du vitrage.

8. Procédé de projection ou de rétroprojection selon l'une quelconque des revendications précédentes **caractérisé en ce que** l'élément en couches est un film flexible.

9. Procédé de projection ou de rétroprojection selon l'une quelconque des revendications précédentes **caractérisé en ce que** le vitrage comprend en outre au moins une couche additionnelle positionnée au-dessus ou en-dessous de l'élément en couches et/ou éventuellement du système à diffusion lumineuse variable, de préférence choisie parmi :

    - les substrats transparents choisis parmi les polymères, les verres ou les céramiques comprenant deux surfaces principales lisses,
    - les matériaux durcissables initialement dans un état visqueux, liquide ou pâteux adapté à des opérations de mise en forme,
    - les intercalaires en matière plastique thermoformable ou sensible à la pression.

10. Procédé de projection ou de rétroprojection selon l'une quelconque des revendications précédentes **caractérisé en ce que** le vitrage comprend :

    - un élément en couches comprenant :

        - une couche externe inférieure choisie parmi les substrats transparents en verre rugueux,
        - une couche centrale comprenant de préférence une couche mince,
        - une couche externe supérieure choisie parmi les matériaux durcissables initialement dans un état visqueux, liquide ou pâteux adapté à des opérations de mise en forme, de préférence une couche sol-gel,

    - un intercalaire en matière plastique thermoformable ou sensible à la pression,
    - un substrat transparent en verre plat comprenant de préférence au moins un revêtement antireflet.

11. Procédé de projection ou de rétroprojection selon la revendication 10 **caractérisé en ce que** le vitrage comprend :

    - un élément en couches,
    - un intercalaire en matière plastique thermoformable ou sensible à la pression,
    - un système à diffusion lumineuse variable comprenant un film fonctionnel encadré par deux supports porteurs d'électrodes, lesdites électrodes étant directement au contact du film fonctionnel,
    - un intercalaire en matière plastique thermoformable ou sensible à la pression,
    - un substrat transparent en verre plat comprenant de préférence au moins un revêtement antireflet.

12. Procédé de projection selon l'une quelconque des revendications précédentes **caractérisé en ce que** le vitrage est utilisé comme un écran de projection fonctionnant en réflexion, c'est à dire que les spectateurs et le projecteur sont situés du même côté du vitrage utilisé comme écran de projection.

13. Vitrage comprenant deux surfaces principales externes (10, 20) comportant :

    - au moins un élément en couches (1) transparent ayant deux surfaces principales externes (2A, 4A) lisses, **caractérisé en ce qu'**il comprend :

        - deux couches externes (2, 4), qui forment chacune une des deux surfaces principales externes (2A, 4A) de l'élément en couches et qui sont constituées de matériaux transparents diélectriques ayant sensiblement le même indice de réfraction ($n2$, $n4$), et
        - une couche centrale (3) intercalée entre les couches externes, cette couche centrale (3) étant formée soit par une couche unique qui est une couche transparente diélectrique d'indice de réfraction ($n3$) différent de celui des couches externes ou une couche métallique, soit par un empilement de couches ($3_1$, $3_2$, ..., $3_k$) qui comprend au moins une couche transparente diélectrique, d'indice de réfraction ($n3_1$, $n3_2$, ... ou $n3_k$) différent de celui des couches externes ou une couche métallique,

    où chaque surface de contact ($S_0$, $S_1$, ..., $S_k$) entre deux couches adjacentes de l'élément en couches qui sont l'une transparente d'indice de réfraction ($n1$, $n2$, $n3$, $n3_1$, $n3_2$, ... ou $n3_k$) et l'autre métallique, ou qui sont deux couches transparentes d'indices de réfraction différents, est texturée et parallèle aux autres surfaces de contact texturées entre deux couches adjacentes qui sont l'une transparente d'indice de réfraction ($n1$, $n2$, $n3$, $n3_1$,

n3$_2$, ...ou n3$_k$) l'autre métallique ou qui sont deux couches transparentes d'indices de réfraction différents, et **caractérisé en ce que** ledit vitrage comprend en outre
- au moins un système à diffusion lumineuse variable comprenant un film fonctionnel susceptible de commuter entre un état transparent et un état diffusant,

le système à diffusion lumineuse variable comprenant le film fonctionnel s'étendant sur toute la surface du vitrage ou sur au moins une partie du vitrage, lorsque le système à diffusion lumineuse variable s'étend sur au moins une partie du vitrage, cette partie de la surface correspond et est alignée avec la partie de la surface du vitrage comprenant l'élément en couches.

14. Vitrage comprenant deux surfaces principales externes (10, 20) selon la revendication 13 **caractérisé en ce qu'**il comporte :

- un élément en couches,
- un intercalaire en matière plastique thermoformable ou sensible à la pression,
- un système à diffusion lumineuse variable comprenant un film fonctionnel encadré par deux supports porteurs d'électrodes, lesdites électrodes étant directement au contact du film fonctionnel,
- un intercalaire en matière plastique thermoformable ou sensible à la pression,
- un substrat transparent en verre plat comprenant de préférence au moins un revêtement antireflet.

## Patentansprüche

1. Projektions- oder Rückprojektionsverfahren, bei dem über eine Verglasung (5), die zwei äußere Hauptoberflächen (10, 20) umfasst, die als Projektions- oder Rückprojektionsschirm verwendet werden, und einen Projektor verfügt wird, wobei das Verfahren darin besteht, mithilfe des Projektors für Zuschauer sichtbare Bilder auf einer der Seiten der Verglasung zu projizieren, wobei die Verglasung ein transparentes Schichtelement (1) mit zwei glatten äußeren Hauptoberflächen (2A, 4A) umfasst, **dadurch gekennzeichnet, dass** das Schichtelement (1) umfasst:

- zwei äußere Schichten (2, 4), die jeweils eine der zwei äußeren Hauptoberflächen (2A, 4A) des Schichtelements ausbilden und die aus transparenten Materialien, vorzugsweise dielektrisch, mit im Wesentlichen demselben Brechungsindex (n2, n4) bestehen, und
- eine mittlere Schicht (3), die zwischen den äußeren Schichten eingelegt ist, wobei diese mittlere Schicht (3) entweder durch eine einzige Schicht, die eine transparente dielektrische Schicht mit einem Brechungsindex (n3), der sich von dem der äußeren Schichten unterscheidet, oder eine metallische Schicht ist, oder durch einen Schichtenstapel (3$_1$, 3$_2$, ..., 3$_k$) ausgebildet ist, der mindestens eine transparente dielektrische Schicht mit einem Brechungsindex (n3$_1$, n3$_2$, ... oder n3$_k$), der sich von dem der äußeren Schichten unterscheidet, oder eine metallische Schicht umfasst,
wobei jede Kontaktoberfläche (S$_0$, S$_1$, ..., S$_k$) zwischen zwei benachbarten Schichten des Schichtelements, von denen die eine transparent mit einem Brechungsindex (n2, n4, n3, n3$_1$, n3$_2$, ... oder n3$_k$) und die andere metallisch ist, oder die zwei transparente Schichten mit unterschiedlichen Brechungsindizes sind, texturiert und parallel zu den anderen texturierten Kontaktoberflächen zwischen zwei benachbarten Schichten ist, von denen eine transparent mit einem Brechungsindex (n2, n4, n3, n3$_1$, n3$_2$, ... oder n3$_k$), die andere metallisch ist oder die zwei transparente Schichten mit unterschiedlichen Brechungsindizes sind, und **dadurch gekennzeichnet, dass** die Verglasung ferner mindestens ein System für eine variable Lichtstreuung umfasst, das eine Funktionsfolie umfasst, die zwischen einem transparenten Zustand und einem streuenden Zustand wechseln kann, wobei sich das System für die variable Lichtstreuung, das die Funktionsfolie umfasst, über die gesamte Oberfläche der Verglasung oder über mindestens einen Teil der Verglasung erstreckt, wobei, wenn sich das System für die variable Lichtstreuung über mindestens einen Teil der Verglasung erstreckt, dieser Teil der Oberfläche dem Teil der Oberfläche der Verglasung, der das Schichtelement umfasst, entspricht und daran ausgerichtet ist.

2. Projektions- oder Rückprojektionsverfahren nach Anspruch 1,
**dadurch gekennzeichnet, dass** die Verglasung ferner mindestens eine Antireflexionsbeschichtung umfasst.

3. Projektions- oder Rückprojektionsverfahren nach Anspruch 2,
**dadurch gekennzeichnet, dass** die Verglasung an der Schnittstelle zwischen der Luft und dem Material, aus dem die Schicht besteht, welche die äußere Hauptoberfläche der Verglasung auf der gegenüberliegenden Seite der Verglasung relativ zu dem Projektor ausbildet, mindestens eine Antireflexionsbeschichtung umfasst.

4. Projektions- oder Rückprojektionsverfahren nach einem der vorstehenden Ansprüche, **dadurch gekennzeichnet, dass** das System für die variable Lichtstreuung elektrisch steuerbar ist und eine Funktionsfolie umfasst, die durch zwei Elektroden tragende Träger umrahmt wird, wobei die Elektroden in direktem Kontakt mit der Funktionsfolie stehen.

5. Projektions- oder Rückprojektionsverfahren nach dem vorstehenden Anspruch, **dadurch gekennzeichnet, dass** das transparente Schichtelement einen der Elektroden tragenden Träger des Systems für die variable Lichtstreuung darstellt, die untere äußere Schicht die Trägerfunktion übernimmt und die Gesamtheit bestehend aus der mittleren Schicht und der oberen äußeren Schicht die Funktion einer Elektrode übernimmt.

6. Projektions- oder Rückprojektionsverfahren nach einem der vorstehenden Ansprüche, **dadurch gekennzeichnet, dass** das System für die variable Lichtstreuung nur in Hinblick auf einen Teil der äußeren Hauptoberflächen (10, 20) der Verglasung ausgebildet ist.

7. Projektions- oder Rückprojektionsverfahren nach einem der vorstehenden Ansprüche, **dadurch gekennzeichnet, dass** das Schichtelement nur in Hinblick auf einen Teil der äußeren Hauptoberflächen (10, 20) der Verglasung ausgebildet ist.

8. Projektions- oder Rückprojektionsverfahren nach einem der vorstehenden Ansprüche, **dadurch gekennzeichnet, dass** das Schichtelement eine flexible Folie ist.

9. Projektions- oder Rückprojektionsverfahren nach einem der vorstehenden Ansprüche, **dadurch gekennzeichnet, dass** die Verglasung ferner mindestens eine zusätzliche Schicht umfasst, die über oder unter dem Schichtelement und/oder möglicherweise dem System für die variable Lichtstreuung angeordnet ist, vorzugsweise ausgewählt aus:

   - transparenten Substraten, ausgewählt aus Polymeren, Gläsern oder Keramiken, umfassend zwei glatte Hauptoberflächen,
   - aushärtbaren Materialien, die zunächst in einem zähflüssigen, flüssigen oder pastösen Zustand sind und für Formgebungsvorgänge geeignet sind,
   - Zwischenlagen aus thermoformbarem oder druckempfindlichem Kunststoff.

10. Projektions- oder Rückprojektionsverfahren nach einem der vorstehenden Ansprüche, **dadurch gekennzeichnet, dass** die Verglasung umfasst:

   - ein Schichtelement, umfassend:
   - eine untere äußere Schicht, ausgewählt aus transparenten Rohg lassubstraten,
   - eine mittlere Schicht, die vorzugsweise eine dünne Schicht umfasst,
   - eine obere äußere Schicht, ausgewählt aus zunächst in einem zähflüssigen, flüssigen oder pastösen Zustand aushärtbaren Materialien, die für Formgebungsvorgänge geeignet sind, vorzugsweise eine Sol-Gel-Schicht,
   - eine Zwischenlage aus thermoformbarem oder druckempfindlichem Kunststoff,
   - ein transparentes Flachglassubstrat, das vorzugsweise mindestens eine Antireflexionsbeschichtung umfasst.

11. Projektions- oder Rückprojektionsverfahren nach Anspruch 10,
   **dadurch gekennzeichnet, dass** die Verglasung umfasst:

   - ein Schichtelement,
   - eine Zwischenlage aus thermoformbarem oder druckempfindlichem Kunststoff,
   - ein System für die variable Lichtstreuung, umfassend eine Funktionsfolie, die durch zwei Elektroden tragende Träger umrahmt wird, wobei die Elektroden in direktem Kontakt mit der Funktionsfolie stehen,
   - eine Zwischenlage aus thermoformbarem oder druckempfindlichem Kunststoff,
   - ein transparentes Flachglassubstrat, das vorzugsweise mindestens eine Antireflexionsbeschichtung umfasst.

12. Projektionsverfahren nach einem der vorstehenden Ansprüche,
   **dadurch gekennzeichnet, dass** die Verglasung als durch Reflexion funktionierender Projektionsschirm verwendet wird, das heißt, dass sich die Zuschauer und der Projektor auf derselben Seite der als Projektionsschirm verwendeten Verglasung befinden.

13. Verglasung, umfassend zwei äußere Hauptoberflächen (10, 20), die aufweist:

- mindestens ein transparentes Schichtelement (1) mit zwei glatten äußeren Hauptoberflächen (2A, 4A), **dadurch gekennzeichnet, dass** es umfasst:

- zwei äußere Schichten (2, 4), die jeweils eine der zwei äußeren Hauptoberflächen (2A, 4A) des Schichtelements ausbilden und die aus transparenten dielektrischen Materialien mit im Wesentlichen demselben Brechungsindex (n2, n4) bestehen, und
- eine mittlere Schicht (3), die zwischen den äußeren Schichten eingelegt ist, wobei diese mittlere Schicht (3) entweder durch eine einzige Schicht, die eine transparente dielektrische Schicht mit einem Brechungsindex (n3), der sich von dem der äußeren Schichten unterscheidet, oder eine metallische Schicht ist, oder durch einen Schichtenstapel ($3_1$, $3_2$, ..., 3k) ausgebildet ist, der mindestens eine transparente dielektrische Schicht mit einem Brechungsindex ($n3_1$, $n3_2$, ... oder $n3_k$), der sich von dem der äußeren Schichten unterscheidet, oder eine metallische Schicht umfasst,
wobei jede Kontaktoberfläche ($S_0$, $S_1$, ..., $S_k$) zwischen zwei benachbarten Schichten des Schichtelements, von denen die eine transparent mit einem Brechungsindex (n1, n2, n3, $n3_1$, $n3_2$, ... oder $n3_k$) und die andere metallisch ist, oder die zwei transparenten Schichten mit unterschiedlichen Brechungsindizes sind, texturiert und parallel zu den anderen texturierten Kontaktoberflächen zwischen zwei benachbarten Schichten ist, von denen eine transparent mit einem Brechungsindex (n1, n2, n3, $n3_1$, $n3_2$, ... oder $n3_k$), die andere metallisch ist oder die zwei transparente Schichten mit unterschiedlichen Brechungsindizes sind, und **dadurch gekennzeichnet, dass** die Verglasung ferner umfasst
mindestens ein System für die variable Lichtstreuung, das eine Funktionsfolie umfasst, die zwischen einem transparenten Zustand und einem streuenden Zustand wechseln kann,
wobei sich das System für die variable Lichtstreuung, das die Funktionsfolie umfasst, über die gesamte Oberfläche der Verglasung oder über mindestens einen Teil der Verglasung erstreckt, wobei, wenn sich das System für die variable Lichtstreuung über mindestens einen Teil der Verglasung erstreckt, dieser Teil der Oberfläche dem Teil der Oberfläche der Verglasung, der das Schichtelement umfasst, entspricht und daran ausgerichtet ist.

**14.** Verglasung, umfassend zwei äußeren Hauptoberflächen (10, 20) nach Anspruch 13, **dadurch gekennzeichnet, dass** sie aufweist:

- ein Schichtelement,
- eine Zwischenlage aus thermoformbarem oder druckempfindlichem Kunststoff,
- ein System für die variable Lichtstreuung, umfassend eine Funktionsfolie, die durch zwei Elektroden tragende Träger umrahmt wird, wobei die Elektroden in direktem Kontakt mit der Funktionsfolie stehen,
- eine Zwischenlage aus thermoformbarem oder druckempfindlichem Kunststoff,
- ein transparentes Flachglassubstrat, das vorzugsweise mindestens eine Antireflexionsbeschichtung umfasst.

**Claims**

**1.** A projection or back-projection method according to which a glazing (5) comprising two main external surfaces (10, 20), used as projection or back-projection screen, and a projector are available, said method consisting in projecting, by virtue of the projector, images viewable by spectators onto one of the sides of the glazing, **characterized in that** said glazing comprises

a transparent layered element (1) having two smooth main external surfaces (2A, 4A), **characterized in that** the layered element (1) comprises:

- two external layers (2, 4), which each form one of the two main external surfaces (2A, 4A) of the layered element and which are composed of transparent materials, dielectric materials, having substantially the same refractive index (n2, n4), and
- a central layer (3) inserted between the external layers, this central layer (3) being formed either by a single layer which is a transparent dielectric layer, with a refractive index (n3) different from that of the external layers, or a metallic layer, or by a stack of layers ($3_1$, $3_2$, ..., $3_k$) which comprises at least one transparent dielectric layer, with a refractive index ($n3_1$, $n3_2$, ... or $n3_k$) different from that of the external layers, or a metallic layer,

where each contact surface ($S_0$, $S_1$, ..., $S_k$) between two adjacent layers of the layered element, one of which is transparent with a refractive index (n2, n4, n3, $n3_1$, $n3_2$, ... or $n3_k$) and the other metallic or which are both transparent layers with different refractive indices, is textured and parallel to the other textured contact surfaces between two adjacent layers, one of which is transparent with a refractive index (n2, n4, n3, $n3_1$, $n3_2$, ... or $n3_k$) and the other metallic or which are both transparent layers with different refractive indices and

at least a variable light scattering system comprising a functional film capable of switching between a transparent state and a scattering state,

the variable light scattering system comprising the functional film extending over the entire surface of the glazing or over at least a portion of the glazing, when the variable light scattering system extends over at least a portion of the glazing, this portion of the surface corresponds to and is aligned with the portion of the surface of the glazing comprising the layered element.

2. The projection or back-projection method as claimed in claim 1, **characterized in that** the glazing additionally comprises at least one antireflection coating.

3. The projection or back-projection method as claimed in claim 2, **characterized in that** the glazing comprises at least one antireflection coating at the interface between the air and the constituent material of the layer forming the main external surface of the glazing, on the opposite side of the glazing with respect to the projector.

4. The projection or back-projection method as claimed in any one of the preceding claims, **characterized in that** the variable light scattering system is electrically controllable and comprises a functional film framed by two electrode-carrying supports, said electrodes being directly in contact with the functional film.

5. The projection or back-projection method as claimed in claim 5, **characterized in that** the transparent layered element constitutes one of the electrode-carrying supports of the variable light scattering system, the lower external layer performs the role of support and the assembly composed of the central layer and of the upper external layer performs the role of electrode.

6. The projection or back-projection method as claimed in any one of the preceding claims, **characterized in that** the variable light scattering system is formed taking into account a portion only of the main external surfaces (10, 20) of the glazing.

7. The projection or back-projection method as claimed in any one of the preceding claims, **characterized in that** the layered element is formed taking into account a portion only of the main external surfaces (10, 20) of the glazing.

8. The projection or back-projection method as claimed in any one of the preceding claims, **characterized in that** the layered element is a flexible film.

9. The projection or back-projection method as claimed in any one of the preceding claims, **characterized in that** the glazing furthermore comprises at least one additional layer positioned above or below the layered element and/or optionally the variable light scattering system, preferably chosen from:

- transparent substrates chosen from polymers, glasses or ceramics comprising two smooth main surfaces,
- curable materials initially in a liquid or pasty viscous state suitable for shaping operations,
- inserts made of thermoformable or pressure-sensitive plastic.

10. The projection or back-projection method as claimed in any one of the preceding claims, **characterized in that** the glazing comprises:

- a layered element comprising:

  - a lower external layer chosen from transparent substrates made of rough glass,
  - a central layer preferably comprising a thin layer,
  - an upper external layer chosen from curable materials initially in a liquid or pasty viscous state suitable for shaping operations, preferably a sol-gel layer,

- an insert made of thermoformable or pressure-sensitive plastic,
- a transparent substrate made of flat glass preferably comprising at least one antireflection coating.

**11.** The projection or back-projection method as claimed in claim 10, **characterized in that** the glazing comprises:

- a layered element,
- an insert made of thermoformable or pressure-sensitive plastic,
- a variable light scattering system comprising a functional film framed by two electrode-carrying supports, said electrodes being directly in contact with the functional film,
- an insert made of thermoformable or pressure-sensitive plastic,
- a transparent substrate made of flat glass preferably comprising at least one antireflection coating.

**12.** The projection method as claimed in any one of the preceding claims, **characterized in that** the glazing is used as a projection screen operating in reflection, that is to say that the spectators and the projector are located on the same side of the glazing used as projection screen.

**13.** A glazing comprising two main external surfaces (10, 20)t comprising:

- at least one transparent layered element (1) having two smooth main external surfaces (2A, 4A), **characterized in that** it comprises:

  - two external layers (2, 4), which each form one of the two main external surfaces (2A, 4A) of the layered element and which are composed of transparent materials, preferably dielectric materials, having substantially the same refractive index (n2, n4), and
  - a central layer (3) inserted between the external layers, this central layer (3) being formed either by a single layer which is a transparent dielectric layer, with a refractive index (n3) different from that of the external layers, or a metallic layer, or by a stack of layers ($3_1$, $3_2$, ..., $3_k$) which comprises at least one transparent dielectric layer, with a refractive index ($n3_1$, $n3_2$, ... or $n3_k$) different from that of the external layers, or a metallic layer,

  where each contact surface ($S_0$, $S_1$, ..., $S_k$) between two adjacent layers of the layered element, one of which is transparent with a refractive index (n1, n2, n3, $n3_1$, $n3_2$, ... or $n3_k$) and the other metallic or which are both transparent layers with different refractive indices, is textured and parallel to the other textured contact surfaces between two adjacent layers, one of which is transparent with a refractive index (n1, n2, n3, $n3_1$, $n3_2$, ... or $n3_k$) and the other metallic or which are both transparent layers with different refractive indices, and
  at least a variable light scattering system comprising a functional film capable of switching between a transparent state and a scattering state,
  the variable light scattering system comprising the functional film extending over the entire surface of the glazing or over at least a portion of the glazing, when the variable light scattering system extends over at least a portion of the glazing, this portion of the surface corresponds to and is aligned with the portion of the surface of the glazing comprising the layered element.

**14.** The glazing comprising two main external surfaces (10, 20) as claimed in claim 13, **characterized in that** it comprises:

- a layered element,
- an insert made of thermoformable or pressure-sensitive plastic,
- a variable light scattering system comprising a functional film framed by two electrode-carrying supports, said electrodes being directly in contact with the functional film,
- an insert made of thermoformable or pressure-sensitive plastic,
- a transparent substrate made of flat glass preferably comprising at least one antireflection coating.

## Fig.1

P

## Fig.2

## Fig.3

## Fig.4

P

## Fig.5

P

Fig.6

Fig.7

UV

EP 2 856 256 B1

Fig.8

Fig.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0823653 A
- WO 2012104547 A
- WO 9219695 A
- EP 2256545 A
- EP 88126 A
- EP 268877 A
- EP 238164 A
- EP 357234 A

- EP 409442 A
- EP 964288 A
- US 4435047 A
- US 4806922 A
- US 4732456 A
- US 5691795 A
- US 3963324 A

**Littérature non-brevet citée dans la description**

- *CHEMICAL ABSTRACTS,* 3524-62-7